# EUROPEAN PATENT SPECIFICATION

(11) **EP 2 990 986 B1**
(45) Date of publication and mention of the grant of the patent: **10.10.2018**
(21) Application number: 15181575.0
(22) Date of filing: 19.08.2015
(51) Int. Cl.: G06F 21/60, G06F 3/12, H04L 29/06, H04N 1/00, H04N 1/44

(54) **OUTPUT SYSTEM, OUTPUT APPARATUS, AND OUTPUT METHOD**
AUSGABESYSTEM, AUSGABEVORRICHTUNG UND AUSGABEVERFAHREN
SYSTÈME DE SORTIE, APPAREIL DE SORTIE ET PROCÉDÉ DE SORTIE

(30) Priority: 28.08.2014 JP 2014173936
(43) Date of publication of application: 02.03.2016
(73) Proprietor: Ricoh Company, Ltd., Tokyo 143-8555 (JP)
(72) Inventor: MORI, Keisuke, Tokyo, 143-8555 (JP)
(74) Representative: Schwabe - Sandmair - Marx

(56) References cited:
- EP-A2- 2 533 514
- JP-A- 2014 142 734
- US-A1- 2012 314 251
- US-A1- 2014 068 715

## Description

### BACKGROUND OF THE INVENTION

### 1. Field of the Invention

The disclosures discussed herein generally relate to an output system, an output apparatus, an output method, and a non-transitory recording medium storing a program.

### 2. Description of the Related Art

There are proposed print systems employing a so-called pull printing (accumulation printing) technology in the related art. The pull printing technology enables a user to output from a printer print data that the user has temporarily accumulated from the printer into a server by transmitting a print request to the server. In the related art print systems, display of names related to the print data is controlled such that the names related to the print data are displayed after the user has logged into the printer. This prevents the print data having high confidentiality for the user from being specified, which may reduce risks of confidential information leakage (e.g., Japanese Laid-open Patent Publication No. 2012-141948, herein after referred to as Patent Document 1).

In the related part pull printing systems, a request enabling displaying or printing the names related to the print data accumulated by the login user is initially transmitted from the printer to the server, and a response to the request is subsequently transmitted to the printer without any restriction. Hence, in the related art print systems, a malicious user may intentionally transmit such a request in order to acquire unauthorized print data.

Such acquisition of unauthorized data may be observed in but is not limited to the pull printing systems and may also be observed in output systems in which output apparatuses such as projectors or monitors configured to output data subject to outputting that are accumulated by the users in accumulation destinations.

JP 2014 142734 A aims to solve problems in that in a print system as a cloud service, authentication is required when a pull printing is carried out; the printer captures print data by using an approved token authenticated by an authentication service in advance in a print server; batch printing in a cloud printing service is achieved by automatically carrying out authentication printing by a dedicated user registered in advance at a print execution timing scheduled in advance; however, if other user logs in a printer due to authentication printing, the dedicated user is caused to log out, in the case of which a job reserved in batch printing is not carried out correctly.
This document discloses the solution that during batch printing, a printer is controlled so as not to accept authentication print log-in of other users. This prevents logout of a user dedicated for batch printing, thus making it possible to securely perform batch printing job.

### SUMMARY OF THE INVENTION

The invention is defined by the independent claims. Accordingly, it is a general object in one embodiment of the present invention to provide an output system, an output apparatus, an output method, and a non-transitory recording medium storing a program capable of preventing unauthorized acquisition of data subject to outputting that substantially obviate one or more problems caused by the limitations and disadvantages of the related art.

According to an aspect of embodiments, there is provided an output system that includes a terminal apparatus; an output apparatus; an authentication apparatus; and one or more information processing apparatuses, the terminal apparatus, the output apparatus, the authentication apparatus, and the information processing apparatuses being connected via a network. The authentication apparatus includes a certificate information providing unit configured to provide the output apparatus with certificate information indicating access authorization for authorizing the output apparatus to use one of the terminal apparatus and the information processing apparatus; and a validity determination result providing unit configured to receive a validity determination request of the certificate information from the one of the terminal apparatus and the information processing apparatus, and provide a validity determination result of the certificate information to a corresponding one of the terminal apparatus and the information processing apparatus. The output apparatus includes a certificate information request unit configured to transmit a certificate information providing request to request the authentication apparatus to provide the certificate information; and a process request unit configured to transmit a process request to the corresponding one of the terminal apparatus and the information processing apparatus by attaching the certificate information provided from the authentication apparatus to the process request. Each of the terminal apparatus and the information processing apparatus includes a validity determination request unit configured to transmit a validity determination request of the certificate information attached to the process request from the output apparatus to the authentication apparatus; and a process execution unit configured to perform a process in accordance with the process request from the output apparatus upon the validity determination result of the certificate information provided from the authentication apparatus indicating that the certificate information is valid.

Other objects, features and advantages of the present invention will become more apparent from the following detailed description when read in conjunction with the accompanying drawings.

### BRIEF DESCRIPTION OF THE DRAWINGS

FIG. 1 is a configuration diagram illustrating an example of a print system according to an embodiment;
FIG. 2 is a hardware configuration diagram illustrating an example of a computer according to an embodiment;
FIG. 3 is a hardware configuration diagram illustrating an example of an image forming apparatus according to an embodiment;
FIG. 4 is a process block diagram illustrating an example of a print server apparatus according to an embodiment;
FIG. 5 is a process block diagram illustrating an example of the image forming apparatus according to the embodiment;
FIG. 6 is a process block diagram illustrating an example of a client terminal according to an embodiment;
FIG. 7 is a process block diagram illustrating an example of a print flow plugin;
FIG. 8 is a process block diagram illustrating an example of a job accumulation plugin;
FIG. 9 is a configuration diagram illustrating an example of server information;
FIG. 10 is a configuration diagram illustrating an example of print job information;
FIG. 11 is an image diagram illustrating an example of a setting screen in the client terminal;
FIG. 12 is a flowchart illustrating an example of a server information registration process;
FIG. 13 is a flowchart illustrating an example of the print job accumulation process;
FIG. 14 is an image diagram illustrating an example of a function selection screen;
FIG. 15 is a flowchart illustrating an example of a login process in the image forming apparatus;
FIG. 16 is an image diagram illustrating an example of a home screen displayed on the image forming apparatus after a user logged in the image forming apparatus;
FIG. 17 is an image diagram illustrating an example of a print job information list screen;
FIG. 18 is a flowchart illustrating an example of a print job output process according to an embodiment;
FIG. 19 is an image diagram illustrating an example of a screen while printing;
FIG. 20 is a flowchart illustrating an example of a TGT acquisition process in the image forming apparatus;
FIG. 21 is an image diagram illustrating an example of the TGT acquisition process in the image forming apparatus;
FIG. 22 is a flowchart illustrating an example of a service ticket acquisition process in the image forming apparatus;
FIG. 23 is an image diagram illustrating an example of the service ticket acquisition process in the image forming apparatus;
FIG. 24 is a flowchart illustrating an example of an authentication token matching process in the print server apparatus;
FIG. 25 is an image diagram illustrating an example of transmission and reception processes of a session key in the print server apparatus;
FIG. 26 is an image diagram illustrating an example of a process of transferring a TGT, and a session key of an AD server apparatus;
FIG. 27 is an image diagram illustrating an example of information held by the print server apparatus; and
FIG. 28 is a flowchart illustrating an example of the print job output process to which the service ticket acquisition process is added.

### DETAILED DESCRIPTION OF THE PREFERRED EMBODIMENTS

In the following, an embodiment is described in detail. Note that the present embodiment illustrates a print system as an example of an output system; however, the present embodiment is not limited to the print system. The output system may be any systems, in addition to a projection system or a display system, insofar as the systems are configured to output data accumulated in an accumulation destination.

### FIRST EMBODIMENT

### SYSTEM CONFIGURATION

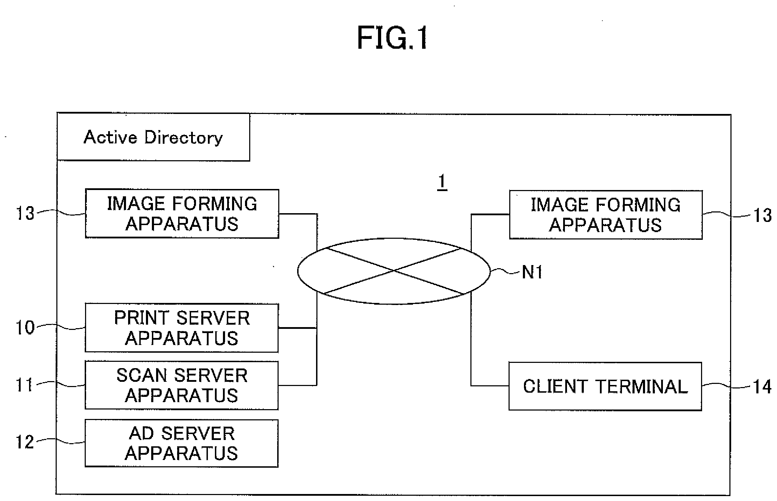

FIG. 1 is a configuration diagram illustrating an example of a print system according to an embodiment. The print system 1 includes a print server apparatus 10, a scan server apparatus 11, an active directory (AD) server apparatus 12, image forming apparatuses 13, and a client terminal 14 that are connected via a network N1 such as a LAN.

Each of the print server apparatus 10, the scan server apparatus 11, the AD server apparatus 12, the image forming apparatuses 13, and the client terminal 14 has a wired or wireless communications part.

In the example of the print system 1 illustrated in FIG. 1, the respective numbers of the scan server apparatuses 11, the AD server apparatuses 12, and the client terminals 14 are one; however, the respective numbers of the scan server apparatuses 11, the AD server apparatuses 12, and the client terminals 14 may be two or more. Further, the number of the image forming apparatuses 13 may be one, or three or more. Note that in the print system 1 according to the embodiment, the print server apparatus 10, the scan server apparatus 11, the AD server apparatus 12, the image forming apparatuses 13, and the client terminal 14 are present under an active directory domain. In this embodiment, it is assumed that a set of services of the print server apparatus 10 itself are registered in active directory (hereinafter simply called "AD").

The print server apparatus 10 may be implemented by one or more information processing apparatuses. The print server apparatus 10 is configured to include print data or print job information. The print server apparatus 10 is configured to transmit print data or print job information to the image forming apparatus 13 based on a request from the image forming apparatus 13.

The scan server apparatus 11 may be implemented by one or more information processing apparatuses. The scan server apparatus 11 is configured to receive scan data from the image forming apparatus 13, and accumulate the scan data in an accumulation destination.

The AD server apparatus 12 may be implemented by one or more information processing apparatuses. The AD server apparatus 12 is configured to provide a directory service. In addition, the AD server apparatus 12 is configured to function as KDC (key distribution center) in Kerberos authentication. KDC may function as an authentication server, a ticket granting server, and a key database.

The authentication server of the AD server apparatus 12 is configured to hold user information, and perform authentication based on a request from a principal such as the image forming apparatus 13 or the like. The ticket granting server of the AD server apparatus 12 is configured to identify a user, and grant a ticket of access authorization data. The key database of the AD server apparatus 12 is configured to manage a common key of the principal such as the image forming apparatus 13.

The image forming apparatus is an example of the output apparatus configured to perform printing based on the received print data or print job information. Note that the image forming apparatus 13 may be a print apparatus such as a printer, a copier, a multifunction peripheral, or a laser printer, a projection apparatus or a display apparatus configured to execute a display output such as a projector or a monitor, or an audio-sound output apparatus configured to output audio data such as audio.

The client apparatus 14 is an information processing apparatus used by a user. The client terminal 14 may be a terminal apparatus such as a smartphone, a mobile phone, and a PC. The client terminal 14 may hold print data. Note that a configuration of the print system 1 illustrated in FIG. 1 is an example, and the print system 1 may have other configurations.

### HARDWARE CONFIGURATION

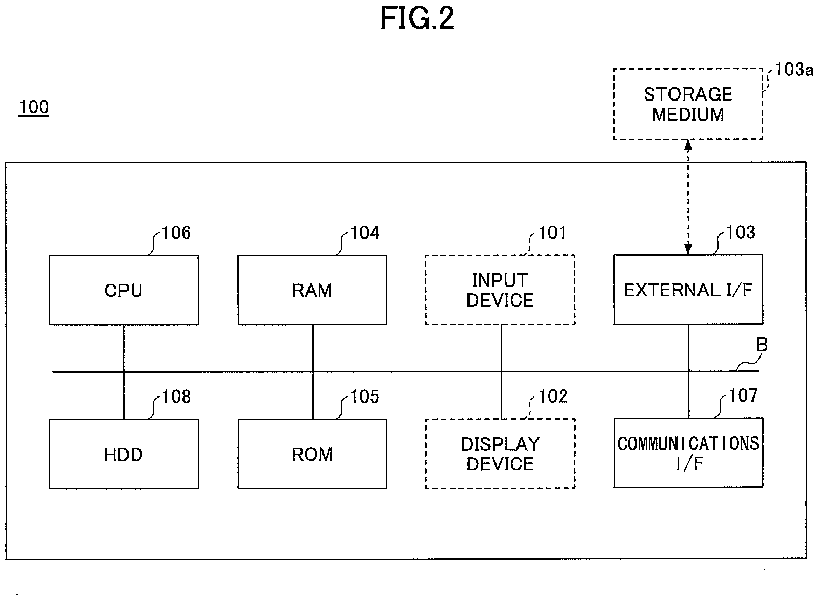

The print server apparatus 10, the scan server apparatus 11, the AD server apparatus 12, and the client terminal 14 illustrated in FIG. 1 may be implemented by a computer or the like having a hardware configuration illustrated in FIG. 2.
FIG. 2 is a hardware configuration diagram illustrating an example of the computer according to the embodiment.

The computer 100 illustrated in FIG. 2 includes an input device 101, a display device 102, an external I/F 103, a RAM 104, a ROM 105, a CPU 106, a communications I/F 107, an HDD 108, and the like that are connected to one another via a bus B. Note that the input device 101 and the display device 102 may optionally be connected as required.

The input device 101 includes a keyboard, a mouse, and the like, and is configured to allow a user to input various operation signals. The display device 102 includes a display, and the like, and is configured to display results of processes performed by the computer 100.

The communications I/F 107 serves as an interface configured to connect the computer 100 to the network N1. In this configuration, the computer 100 may be able to perform data communications via the communications I/F 107.

The HDD 108 serves as a non-volatile storage device configured to store programs and data. Example of the stored programs and data include an OS serving as basic software that is configured to control overall operations of the computer 100, application software that is configured to provide various functions on the OS, and the like.

The external I/F 103 serves as an interface with respect to external devices. Examples of the external devices include a recording medium 103a, and the like. Hence, the computer 100 may be able to read information from the recording medium 103a or write information on the recording medium 103a via the external I/F 103. Examples of the recording medium 103a include a flexible disk, a CD, a DVD, an SD card, and a USB memory.

The ROM 105 is a non-volatile semiconductor memory (a storage device) configured to retain programs or data even when power supply is turned off. The ROM 105 is configured to store programs and data such as BIOS, OS settings, network settings, and the like that are executed at startup of the computer 100. The RAM 104 is a volatile semiconductor memory configured to temporarily store programs and data.

The CPU 106 is a processor configured to implement overall control operations or functions of the computer 100 by loading programs and data in the RAM 104 from a storage device such as the ROM 105 or the HDD 108 to execute processes in accordance with the loaded programs and data.

The print server apparatus 10, the scan server apparatus 11, the AD server apparatus 12, and the client terminal 14 may be able to implement later-described various types of processes by the hardware configuration of the computer 100 illustrated in FIG. 2, for example.

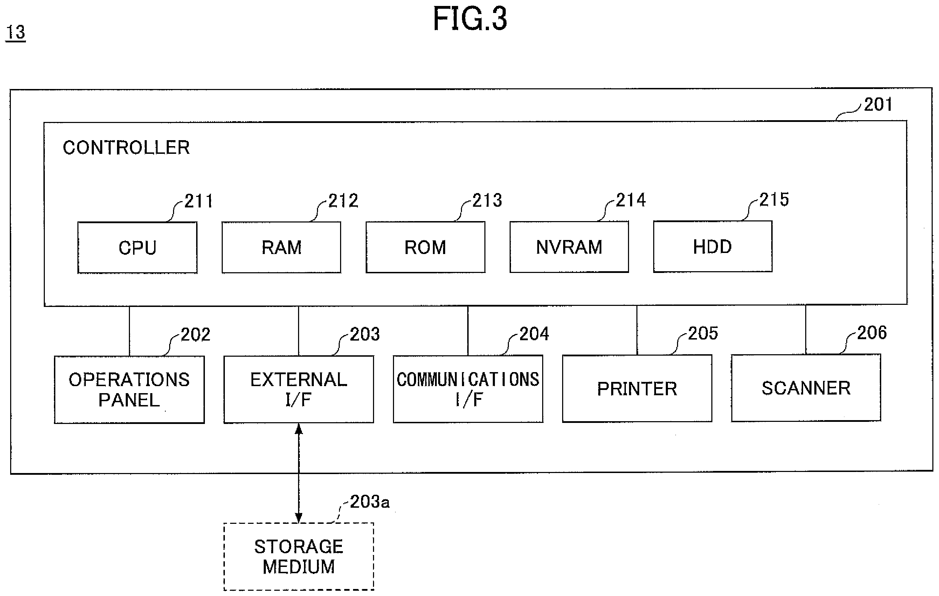

The image forming apparatus 13 illustrated in FIG. 1 may be implemented by a computer having a hardware configuration illustrated in FIG. 3, for example. FIG. 3 is a hardware configuration diagram illustrating an example of the image forming apparatus according to the embodiment. The image forming apparatus 13 illustrated in FIG. 3 includes a controller 201, an operations panel 202, an external I/F 203, a communications I/F 204, a printer 205, and a scanner 206.

The controller 201 includes a CPU 211, a RAM 212, a ROM 213, an NVRAM 214, and an HDD 215. The ROM 213 is configured to store various types of programs and data. The RAM 212 is configured to temporarily store programs and data. The NVRAM 214 may, for example, store setting information and the like. Further, the HDD 215 is configured to store various types of programs and data.

The CPU 211 is configured to implement overall control operations or functions of the image forming apparatus 13 by loading programs, data, and setting information in the RAM 212 from a storage device such as the ROM 213, the NVRAM 214, and the HDD 215 to execute processes in accordance with the loaded programs, data, and setting information.

The operations panel 202 includes an input part configured to receive input from the user, and a display part configured to perform display. The external I/F 203 servers as an interface with respect to external devices. Examples of the external devices include a recording medium 203a, and the like. Hence, the image forming apparatus 13 may be able to read information from the recording medium 203a or write information on the recording medium 203a via the external I/F 203. Examples of the recording medium 203a include a flexible disk, a CD, a DVD, an SD card, and a USB memory.

The communications I/F 204 serves as an interface configured to connect the image forming apparatus 13 to the network N1. In this configuration, the image forming apparatus 13 may be able to perform data communications via the communications I/F 204. The printer 205 is a print apparatus configured to print the print data on sheets of paper. The scanner 206 is a reading apparatus configured to read image data (electronic data) from a document.

### SOFTWARE CONFIGURATION

### PRINT SERVER APPARATUS

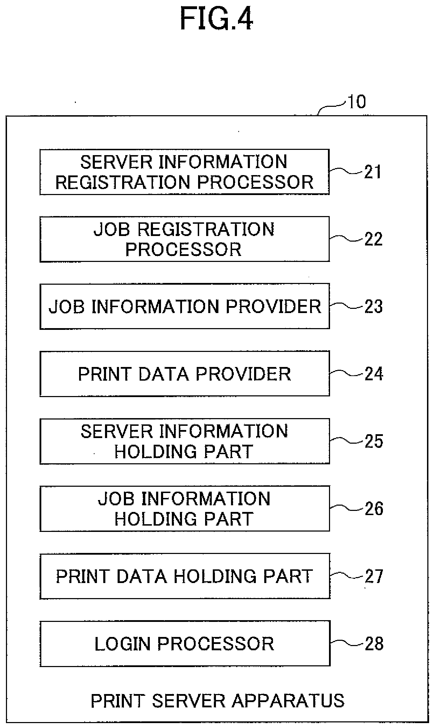

The print server apparatus 10 according to the embodiment may be implemented, for example, by process blocks illustrated in FIG. 4. FIG. 4 is a process block diagram illustrating an example of the print server apparatus 10 according to the embodiment.

The print server apparatus 10 is configured to implement a server information registration processor 21, a job registration processor 22, a job information provider 23, a print data provider 24, a server information holding part 25, a job information holding part 26, a print data holding part 27, and a login processor 28 by executing a program.

The server information registration processor 21 is configured to receive registration of later-described server information from the client terminal 14 to perform a server information registration process. The job registration processor 22 is configured to receive a print job from the client terminal 14 to perform a print job registration process. The job information provider 23 is configured to provide print job information to the image forming apparatus 13 based on a request from the image forming apparatus 13.

The print data provider 24 is configured to provide print data to the image forming apparatus 13 based on a request from the image forming apparatus 13. The server information holding part 25 is configured to hold later-described server information. The job information holding part 26 is configured to hold print job information. Further, the print data holding part 27 is configured to hold print data. The login processor 28 is configured to perform a later-described login process with respect to the AD server apparatus 12.

### IMAGE FORMING APPARATUS

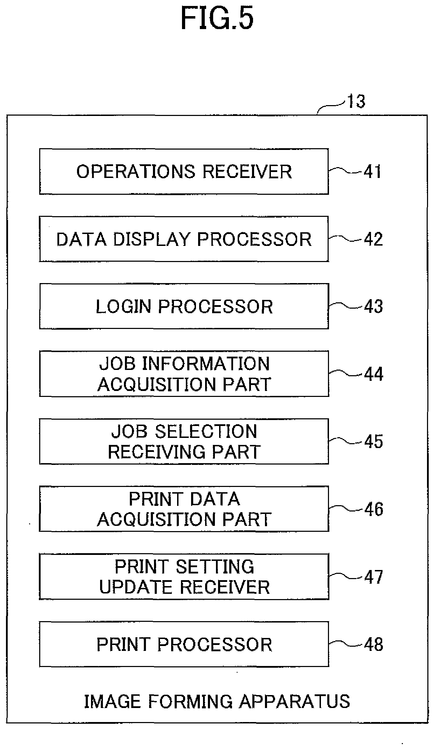

The image forming apparatus 13 according to the embodiment may be implemented, for example, by process blocks illustrated in FIG. 5. FIG. 5 is a process block diagram illustrating an example of the image forming apparatus according to the embodiment.

The image forming apparatus 13 is configured to implement an operations receiver 41, a data display processor 42, a login processor 43, a job information acquisition part 44, a job selection receiving part 45, a print data acquisition part 46, a print setting update receiver 47, and a print processor 48 by executing a program.

The operations receiver 41 is configured to receive operations from the user. The data display processor 42 is configured to display information or the like to the user. The login processor 43 is configured to receive a login operation from the user to perform a later-described login process. The job information acquisition part 44 is configured to acquire print job information from the print server apparatus 10.

The job selection receiving part 45 is configured to receive a desired one of the print jobs selected from a later-described print job information list screen. The print data acquisition part 46 is configured to acquire print data of the print job selected by the user from the print server apparatus 10 or the client terminal 14 as described later. The print setting update receiver 47 is configured to update print settings for the print data upon receiving a print setting update request from the user. The print processor 48 is configured to cause the printer 205 to print the acquired print data in accordance with the print settings.

### CLIENT TERMINAL

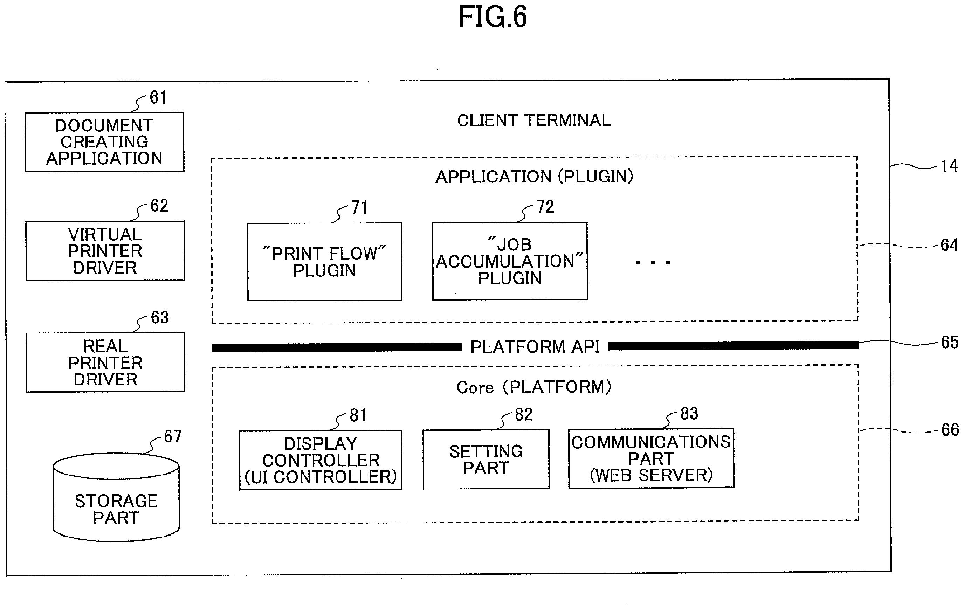

The client terminal 14 according to the embodiment may be implemented, for example, by process blocks illustrated in FIG. 6. FIG. 6 is a process block diagram illustrating an example of the client terminal according to the embodiment.

The client terminal 14 is configured to implement a document creating application 61, a virtual printer driver 62, a real printer driver 63, a plugin 64, a platform API 65, a platform 66, and a storage part 67 by executing a program. The plugin 64 includes a print flow plugin 71, and a job accumulation plugin 72. The platform 66 includes a display controller (UI controller) 81, a setting part 82, and a communications part 83.

The document creating application 61 is an example of an application configured to receive a print request from the user. The document creating application 61 is only an example, and may be an application configured to receive an output request such as a print request from the user.

The virtual printer driver 62 is configured to convert application data into print data in a model-independent intermediate format to output the converted print data. The print data in a model-independent intermediate format are independent of models of the image forming apparatus. Data in XPS (XML Paper Specification) are an example of the intermediate format print data. In addition, application data are an example of data subject to outputting.

The real printer driver 63 is a printer driver configured to convert the application data or the intermediate format print data into print data in a format compatible to the image forming apparatus 13 so that the image forming apparatus 13 is able to print the converted print data. Data in a RAW format are an example of print data in a real format.

Note that data subject to outputting such as the application data or the print data in the intermediate format or real format may be considered as output data handled as an output target from the time at which the user transmits an output request to the time at which the output apparatus outputs the output target. For example, the application data may be data in a data format in accordance with the application.

Hence, the application data, the print data in the intermediate format, the print data in the real format, and the like may all be data subject to outputting regardless of data formats from the time at which the output request is transmitted to the time at which the output is executed.

Further, the output data are not limited to data for use in print output. The output data may be data for use in output of display (projection) such as display data or image data, or may be data for use in output of audio (sound-voice) data. The output data may be handled in accordance with each of output applications such as printing, displaying, replaying sound or voice, or may be handled in accordance with a combination of these output applications.

The plugin 64 is software operating on the platform 66. The plugin 64 may utilize a function of the platform 66 by using the platform API 65. The print flow plugin 71 of the plugin 64 is configured to perform print flow control. The job accumulation plugin 72 of the plugin 64 is configured to accumulate print jobs and manage the accumulated print jobs.

The platform API 65 is an interface prepared for the plugin 64 to use a function of the platform 66. The platform API 65 is a prescribed interface provided for allowing the platform 66 to receive a request from the plugin 64. The platform API 65 may, for example, be formed of functions or classes.

The display controller 81 of the platform 66 may be configured to control display of the display device 102 based, for example, on a request from the document creating application 61, or the plugin 64. The setting part 82 is configured to set the plugin 64. The communications part 83 is configured to execute communications with the print server apparatus 10, the scan server apparatus 11, the AD server apparatus 12, the image forming apparatus 13, and the like. The storage part 67 is configured to store settings and the like.

The client terminal 14 integrates functions commonly used by the plugin 64 so as to integrate processes. Note that classification of components in the process block diagram in FIG. 6 is merely an example. It is not mandatory to hierarchically classify the components such as those illustrated in FIG. 6. The desired plugin 64 may be appropriately installed and used by the administrator or the user. Hence, it is not mandatory for the client terminal 14 to have the print flow plugin 71 and the job accumulation plugin 72.

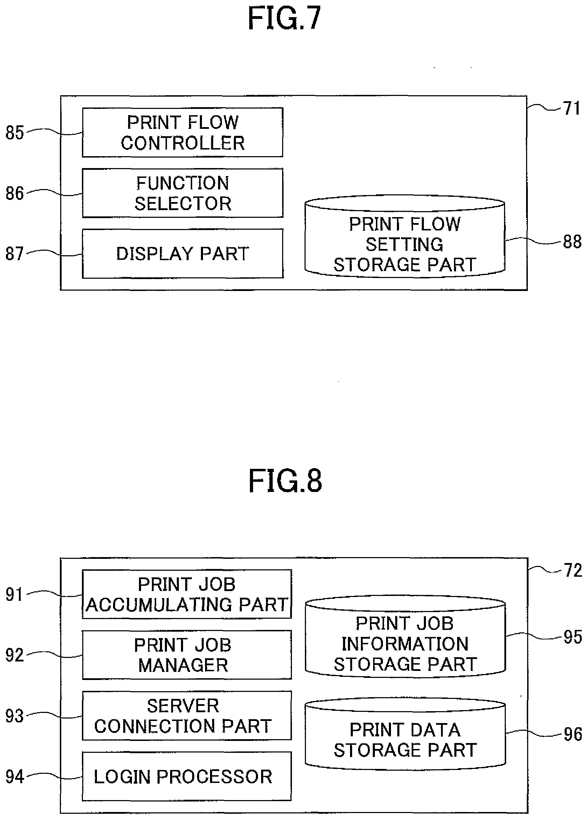

The print flow plugin 71 of the client terminal 14 may be implemented, for example, by a process block illustrated in FIG. 7. FIG. 7 is a process block diagram illustrating an example of a print flow plugin.

The print flow plugin 71 in FIG. 7 includes a print flow controller 85, a function selector 86, a display part 87, and a print flow setting storage part 88. The print flow controller 85 is configured to execute a print flow. The function selector 86 is configured to select a desired function at printing. The display part 87 is configured to display a later-described function selection screen on the display device 102. The print flow setting storage part 88 is configured to store settings of the print flow.

The job accumulation plugin 72 of the client terminal 14 may be implemented, for example, by a process block illustrated in FIG. 8. FIG. 8 is a process block diagram illustrating an example of a job accumulation plugin. The job accumulation plugin 72 illustrated in FIG. 8 includes a print job accumulating part 91, a print job manager 92, a server connection part 93, a login processor 94, a print job information storage part 95, and a print data storage part 96.

The print job accumulating part 91 is configured to accumulate print jobs. The print job manager 92 is configured to manage the print jobs. Further, the server connection part 93 is configured to connect the client terminal 14 to the print server apparatus 10, the scan server apparatus 11, the AD server apparatus 12, and the image forming apparatus 13. The login processor 94 is configured to perform a later-described login process with respect to the AD server apparatus 12. The print job information storage part 95 is configured to store print job information associated with the print jobs. The print data storage part 96 is configured to store print data in an intermediate format serving as entities of print job data.

### SERVER INFORMATION

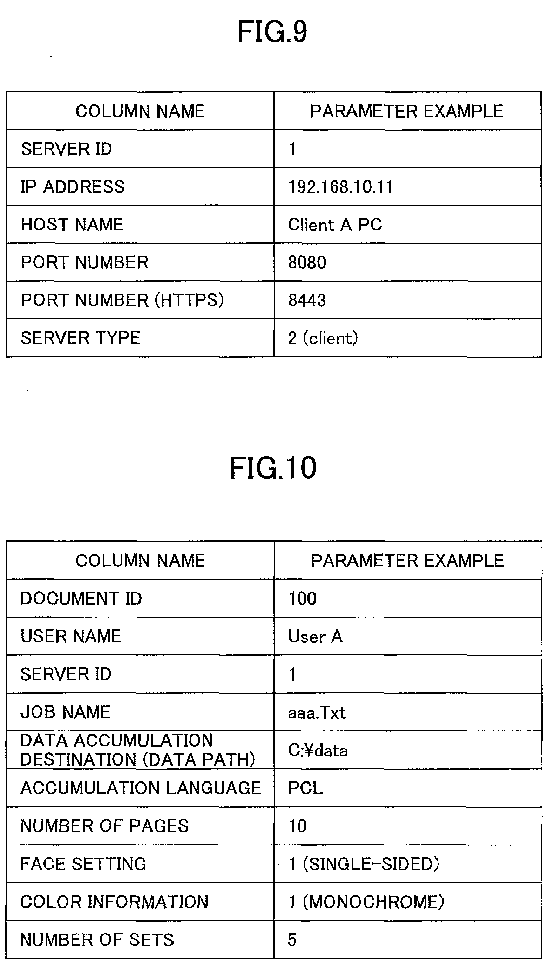

FIG. 9 is a configuration diagram illustrating an example of server information. The server information in FIG. 9 includes respective items of a server ID, an IP address, a host name, a port number, a port number (https), and a server type. The server ID is specific information for uniquely specifying the print server apparatus 10 or the client terminal 14 as a server. The IP address is an IP address of the server specified by the server ID.

The host name is a host name of the server specified by the server ID. The port number is a port number for performing communications with the server specified by the server ID. The port number (https) is a port number for performing communications with the server specified by the server ID in an encrypted condition. Further, the server type is server type information indicating whether the server specified by the server ID is the print server apparatus 10 or the client terminal 14.

For example, to print the print data, the image forming apparatus 13 may be able to search for the server information in FIG. 9 using the server ID included in the later-described job information as a key to determine whether the print data are accumulated in the print server apparatus 10 or the client terminal 14.

In addition, the image forming apparatus 13 may be able to perform communications with the print server apparatus 10 or the client terminal 14 that accumulates the print data by using the detected sever information to acquire the print data.

### PRINT JOB INFORMATION

FIG. 10 is a configuration diagram illustrating an example of print job information. The print job information includes respective items of a document ID, a user name, a server ID, a job name, a data accumulation destination, an accumulation language, the number of pages, a face setting, color information, and the number of sets.

The document ID is identification information for uniquely identifying each print job. The user name is a name of a user who registers the print job. The server ID is an ID of a server in which print data of the print jobs are accumulated. The job name is a name of a print job such as a document name of the print data. The data accumulation destination is a location or place in which print data in the intermediate format or print data in a real format are accumulated.

The accumulation language indicates a format of the accumulated print data. For example, the accumulation language of the print job information being "XPS" indicates the accumulated print data in the intermediate format whereas the accumulation language of the print job information being "PCL" indicates the accumulated print data in the real format. The print data in the intermediate format indicate that the print data are in a format that is easily re-editable, and that a common specification associated with the format is generally disclosed. However, the data format of the print data in the intermediate format is not limited to the XPS. The data format of the print data in the intermediate format may, for example, be a PDF (portable document format) or the like.

On the other hand, the print data in a real format are the print data depending on the image forming apparatus 13. However, the data format of the print data in the real format is not limited to the PCL. The data format of the print data in the real format may, for example, be a PS (postscript) or the like.

An example illustrating the characteristics difference between the intermediate format print data and the real format print data may be the difference in flexibility of the output form settings of the print data (editing of the output data). Examples of the output form settings of the print data may include a print face setting such as double face/single face, a color mode setting such as color/monochrome, an integration setting such as 2-in-1, and the like.

In a case of the print data being in the intermediate format such as "XPS", the print face setting, the color mode setting, and the integration setting may be changed. In a case of the print data being in the real format such as "PCL", the print face setting and the color mode setting (color to monochrome) may be changed; however, there are some restrictions to change the settings. For example, a change in the color mode setting (monochrome to color) or in the integration setting is not allowed. The intermediate print data being data in an easily re-editable format may indicate flexibility in the setting change associated with the output form as one aspect.

The number of pages indicates the number of pages of the print data. The face setting indicates the number of print faces of the print data. The color information indicates color information of the print data. The number of sets indicates the number of sets of the print data at printing. For example, when the user requests registration of a print job, print job information associated with the print job for which the user requests registration is registered.

### DETAILS OF PROCESS

In the following, details of a process of the print system 1 according to the embodiment are described.

### SETTING PROCESS IN CLIENT TERMINAL

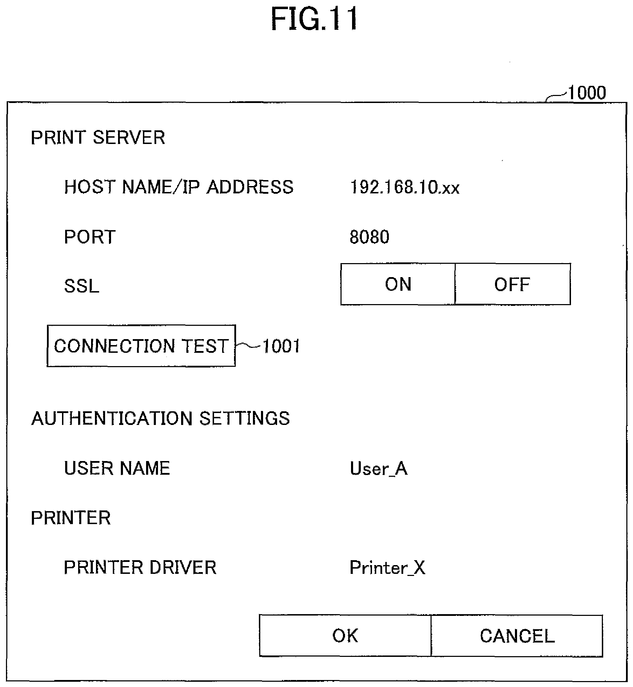

FIG. 11 is an image diagram illustrating an example of a setting screen in the client terminal 14. The setting screen 1000 in FIG. 11 may allow the setting for enabling the communications with the print server apparatus 10, the setting of the user name for registering the print job, and the setting of the printer driver for generating the print data in the real format.

The setting for enabling the communications with the print server apparatus 10 may require items of host name/IP address, the port number, and SSL enable/disable of the print server apparatus 10. The setting for enabling the communications with the print server apparatus 10 may be checked by a connection test performed by depressing a connection button 1001.

### SERVER INFORMATION REGISTRATION PROCESS

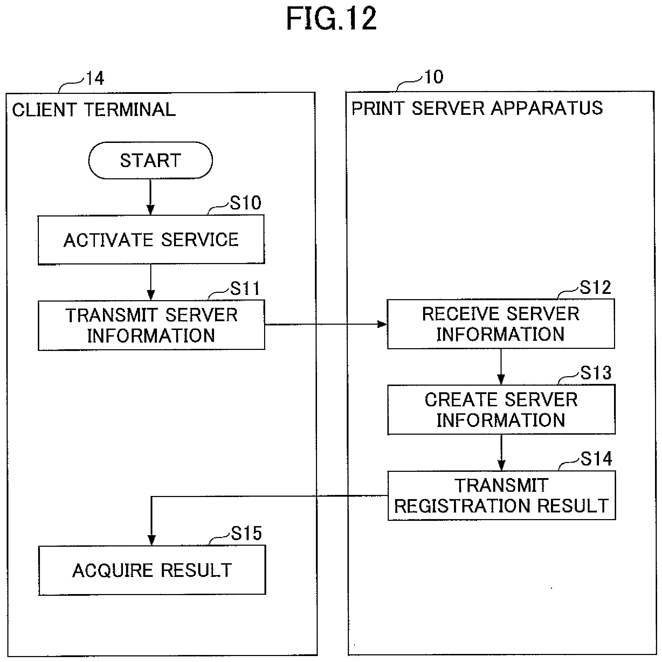

For example, the client terminal 14 may perform a server information registration process such as the one illustrated in FIG. 12 for registering the server information illustrated in FIG. 9 in the print server apparatus 10. FIG. 12 is a flowchart illustrating an example of a server information registration process.

In step S10, the client terminal 14 activates a service by activation of the plugin 64. In step S11, the server connection part 93 of the job accumulation plugin 72 contained in the client terminal 14 transmits server information of the own client terminal 14 illustrated in FIG. 9 to the print server apparatus 10.

In step S12, the server information registration processor 21 of the print server apparatus 10 receives the server information from the client terminal 14. In step S13, the server information registration processor 21 conducts a search process to verify whether the received server information is held (stored) in the server information holding part 25.

When the received server information is not held in the server information holding part 25, the server information registration processor 21 generates new server information by assigning a unique server ID to the received server information, and saves the generated new server information in the server information holding part 25. In step S14, the server information registration processor 21 transmits the server ID of the server information to the client terminal 14 together with a registration result. In step S15, the server connection part 93 of the client terminal 14 acquires the server ID of the server information from the print server apparatus 10 together with the registration result.

Hence, the client terminal 14 registers a print job by setting the acquired server ID of the server information in the print job information to report an accumulation destination of the print data to the print server apparatus 10. For example, the print server apparatus 10 may specify the server information of the client terminal 14 based on the server ID of the print job information to determine that the print data are accumulated in the client terminal 14 based on a server type of the server information.

### PRINT JOB ACCUMULATION PROCESS

For example, the user may operate the document creating application 61 to display a print setting screen, and select a virtual printer driver 62 to transmit a print instruction, thereby initiating a print job accumulation process.

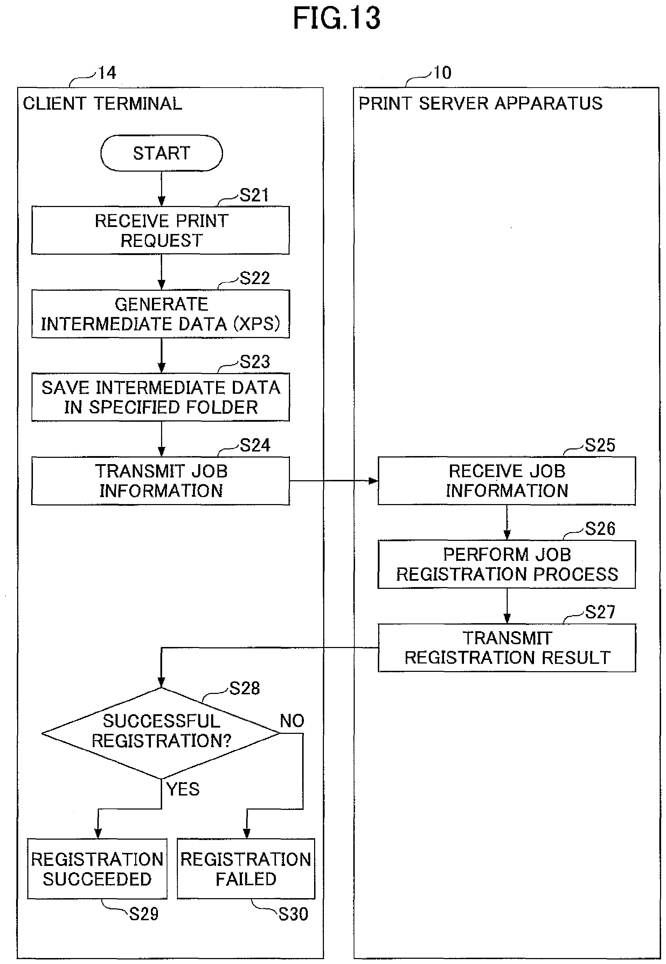

When the user selects the virtual printer driver 62 to transmit the print instruction, the client terminal 14 starts the print job accumulation process illustrated in FIG. 13. FIG. 13 is a flowchart illustrating an example of the print job accumulation process.

In step S21, the document creating application 61 transmits a print event to the virtual printer driver 62. The virtual printer driver 62 transmits the print event to the print flow controller 85 of the print flow plugin 71.

Further, in step S22, the virtual printer driver 62 converts application data into print data in an intermediate format. In addition, the virtual printer driver 62 generates print job information illustrated in FIG. 10. The print flow controller 85 displays a function selection screen on the display part 87 based on the print event received from the virtual printer driver 62.

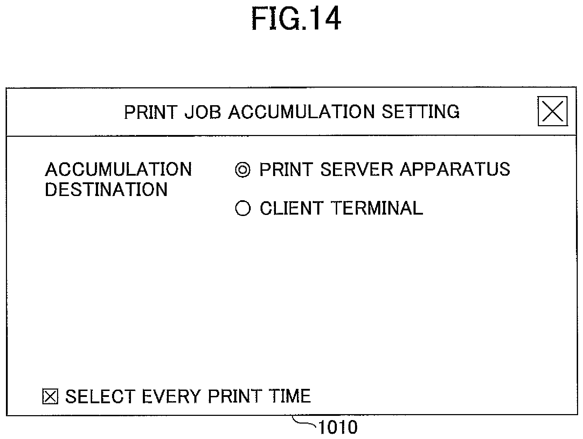

FIG. 14 is an image diagram illustrating an example of the function selection screen. The function selection screen 1010 is used in a case where the accumulation destination for the print data is selected by the user. The user selects the accumulation destination for the print data from the function selection screen 1010. The user is able to select the print server apparatus 10 or the client terminal 14 as the accumulation destination for the print data from the function selection screen 1010 in FIG. 14.

When the user selects the "client terminal", the print job manager 92 of the job accumulation plugin 72 manages the print data in the intermediate format as a management target. When the user selects the "print server apparatus", the print job accumulating part 91 of the job accumulation plugin 72 generates print data in a real format from the print data in the intermediate format by using the real printer driver 63.

In the following illustration, it is assumed that the "client terminal" is selected from the function selection screen 1010. In step S23, the print job accumulating part 91 of the job accumulation plugin 72 saves the intermediate format print data in a specified folder serving as a data accumulation destination (a data path).

In step S24, the server connection part 93 transmits the print job information to the print server apparatus 10. In step S25, the job registration processor 22 of the print server apparatus 10 receives the print job information from the client terminal 14.

In step S26, the job registration processor 22 registers the received print job information in the job information holding part 26. In step S27, the job registration processor 22 transmits a registration result of the print job information to the client terminal 14.

In step S28, the print job accumulating part 91 of the client terminal 14 determines whether the registration result of the print job information received from the print server apparatus 10 indicates successful registration.

When the registration result indicates successful registration, the print job accumulating part 91 process step S29, and may display a pop-up (message) such as "registration succeeded". On the other hand, when the registration result indicates unsuccessful registration (registration failed), the print job accumulating part 91 process step S30, and may display a pop-up (message) such as "registration failed".

Note that when the "print server apparatus" is selected from the function selection screen 1010, the server connection part 93 transmits the print job information and the real format print data to the print server apparatus 10 in step S24. Further, when the print server apparatus 10 has a conversion function to convert the intermediate format print data into the real format print data, the print data transmitted to the print server apparatus 10 may be the intermediate format print data.

In step S25, the job registration processor 22 receives the print job information and the real format print data from the client terminal 14. In step S26, the job registration processor 22 registers the received print job information in the job information holding part 26. In addition, the job registration processor 22 registers the received real format print data in the print data holding part 27. In step S27, the job registration processor 22 transmits a registration result of the print job information and the real format print data to the client terminal 14.

According to the print job accumulation process in FIG. 13, the function selection screen 1010 may be displayed on the client terminal 14 so as to allow the user to select a desired one of the accumulation destinations for the print data. Moreover, according to the print job accumulation process in FIG. 13, the print job information of the print data accumulated in the print server apparatus 10 or the client terminal 14 may be registered in the print server apparatus 10.

### LOGIN PROCESS IN IMAGE FORMING APPARATUS

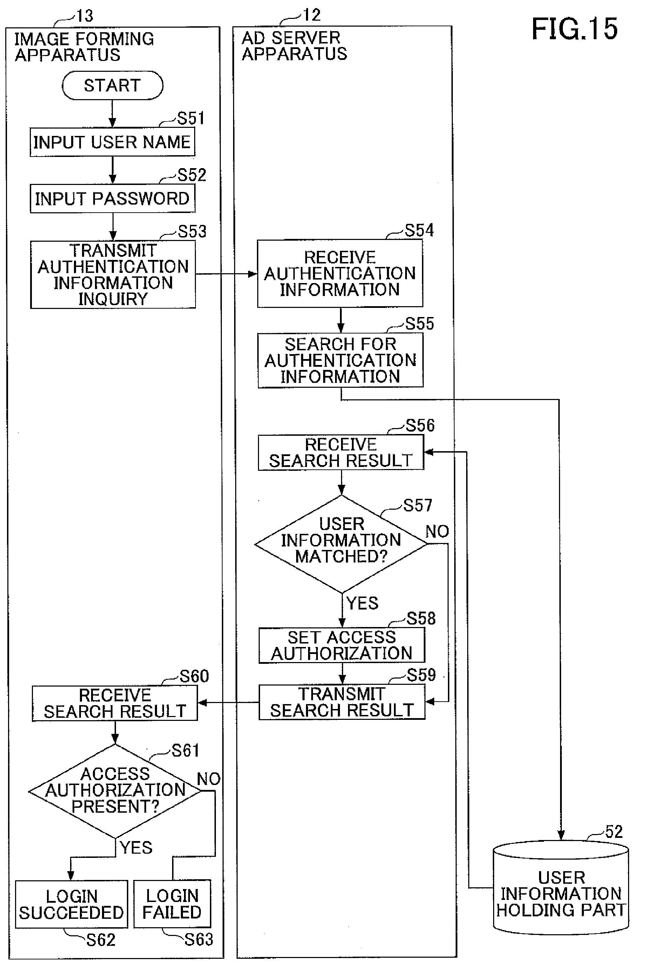

The user logs into the image forming apparatus 13 by following a procedure illustrated in FIG. 15. FIG. 15 is a flowchart illustrating an example of a login process in the image forming apparatus 13.

The user may operate the operations panel 202 to request, for example, display of a login screen. The operations receiver 41 of the image forming apparatus 13 receives the operations from the user to cause the data display processor 42 to display the login screen.

In step S51, the operations receiver 41 receives a user name input by the user into the login screen. Further, in step S52, the operations receiver 41 receives a password input by the user into the login screen. Note that the user name and the password are examples of user authentication information. In step S53, the login processor 43 transmits the user name and password input into the login screen to the AD server apparatus 12 as authentication information to inquire about the authentication information.

In step S54, the AD server apparatus 12 receives the authentication information from the image forming apparatus 13. In step S55, the AD server apparatus 12 requests the user information holding part 52 to search for the authentication information received from the image forming apparatus 13. The user information holding part 52 searches for the authentication information received from the image forming apparatus 13 to verify whether the user information holding part 52 holds the received authentication information, and subsequently transmits a search result to the AD server apparatus 12. Note that in FIG. 15, the user information holding part 52 is illustrated outside the AD server apparatus 12. However, the AD server apparatus 12 may alternatively have the user information holding part 52.

In step S56, the AD server apparatus 12 receives the search result from the user information holding part 52. In step S57, the AD server apparatus 12 verifies whether the authentication information received from the image forming apparatus 13 matches the authentication information held in the user information holding part 52.

When the authentication information received from the image forming apparatus 13 matches the authentication information held in the user information holding part 52, the AD server apparatus 12 sets access authorization with respect to the user for accessing the image forming apparatus 13 in step S58. In step S59, the AD server apparatus 12 transmits access authorization information set to the user together with a successful access authorization report to the image forming apparatus 13.

On the other hand, when the authentication information received from the image forming apparatus 13 does not match the authentication information held in the user information holding part 52, the AD server apparatus 12 transmits an access failure report to the image forming apparatus 13 in step S59.

In step S60, the login processor 43 of the image forming apparatus 13 receives a search result with respect to an inquiry about the authentication information from the AD server apparatus 12. In step S61, the login processor 43 of the image forming apparatus 13 determines whether access authorization information is received from the AD server apparatus 12 as a result of the inquiry about the authentication information.

When the login processor 43 determines that the access authorization information has been received, the login processor 43 allows successful login in step S62. Owing to the login being successful, the user may be able to access the applications and functions of the image forming apparatus 13 within the access authorization range set with respect to the user. On the other hand, when the login processor 43 determines that the access authorization information has not been received, the login processor 43 displays login failure on the operations panel 202 or the like.

In the login process illustrated in FIG. 15, the user name and the password are used as the authentication information of the user. However, the login process may be performed by using registration information of the IC card. The login process utilizing the registration information of the IC card may be enabled, for example, by registering in advance the registration information of the IC card in association with information specifying the user such as the user name in the user information holding part 52. Note that when the registration information of the IC card that is not associated with the information specifying the user is used in the login process, a registration process of associating the registration information of the IC card with the information specifying the user such as the user name may be received from the image forming apparatus 13.

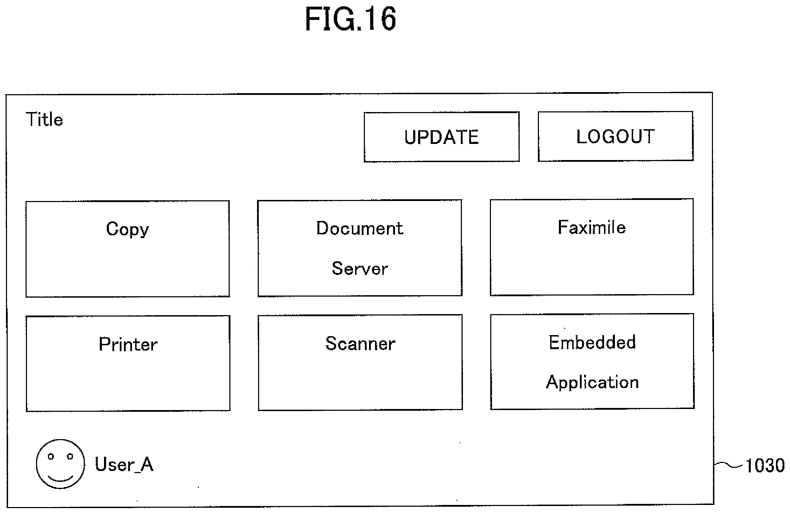

When the login has succeeded, the data display processor 42 of the image forming apparatus 13 may display a home screen 1030 illustrated in FIG. 16 on the operations panel 202. FIG. 16 is an image diagram illustrating an example of the home screen displayed on the image forming apparatus 13 after the user logged in the image forming apparatus 13. The home screen 1030 of FIG. 16 is configured to display respective buttons linked to applications such as copy, printer, document server, scanner, facsimile, and the like, which facilitate transition to the respective applications.

Further, the home screen 1030 of FIG. 16 is configured to further include an update button and a logout button to further facilitate a screen update and logout process. The home screen 1030 of FIG. 16 may also set a link to "embedded applications" other than the basic applications. Note that the home screen 1030 illustrated in FIG. 16 is only an example, and a layout of the home screen 1030 may be changed based on the access authorization set with respect to the user or by the user's operations.

### DISPLAY OF PRINT JOB INFORMATION LIST SCREEN

The user may, for example, request the image forming apparatus 13 to display a print job information list screen by depressing via the home screen 1030 any of link buttons linked to the applications of the printer. The job information acquisition part 44 of the image forming apparatus 13 requests the print server apparatus 10 to transmit the print job information of the login-succeeded user. The job information provider 23 of the print server apparatus 10 searches for the print job information setting a user name of the login-succeeded user.

Further, the job information provider 23 acquires the server ID set in the detected print job information and searches for server information setting the server ID. The job information provider 23 transmits the detected print job information and server information to the image forming apparatus 13.

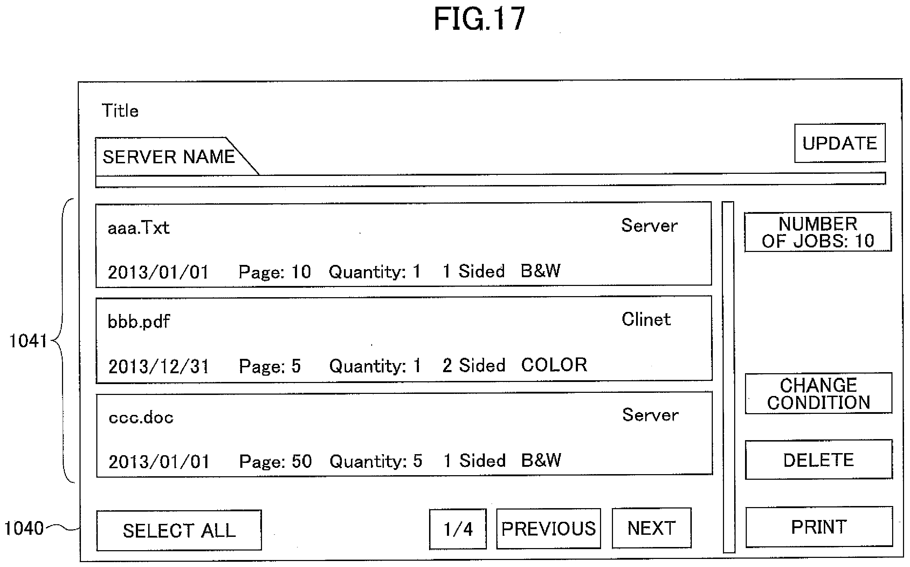

The job information acquisition part 44 of the image forming apparatus 13 receives the print job information of the login-succeeded user and the server information of the server ID set in this print job information from the print server apparatus 10. The data display processor 42 of the image forming apparatus 13 displays the print job information list screen 1040 illustrated in FIG. 17 on the operations panel 202 by using the print job information received from the print server apparatus 10 and the server information of the server ID set in the print job information.

FIG. 17 is an image diagram illustrating an example of the print job information list screen. The print job information list screen 1040 illustrated in FIG. 17 includes a print job information list 1041 of the login-succeeded users. The print job information list 1041 is formed of selectable components representing the print job information such as buttons.

Examples of the selectable components representing the print job information in FIG. 17 include a print data document name, date on which the print job is accumulated, the number of pages, the number of sets, a face setting, color information, and an accumulation destination for the print data.

Further, the print job information list screen 1040 of FIG. 17 includes a "select all" button, an "update" button, a "change condition" button, a "delete" button, and a "print" button. In addition, the print job information list screen 1040 of FIG. 17 displays the number of print jobs accumulated by the login-succeeded users.

The "select all" button is used for selecting all the print job information listed on the print job information list 1041. The "update" button is used for updating the print job information list 1041. The job information acquisition part 44 reacquires the print job information and the server information from the print server apparatus 10 when the user depresses the "update" button.

The "change condition" button is used for displaying the print setting change screen of the print job information. The "delete" button is used for deleting the selected print job information. The "print" button is used for transmit a print instruction of the selected print job information.

### PRINT JOB OUTPUT PROCESS

For example, the user may be able to request the image forming apparatus 13 to perform a print job output process by selecting a desired one of the print job information sets listed on the print job information list 1041 of the print job information list screen 1040, and depressing the print button.

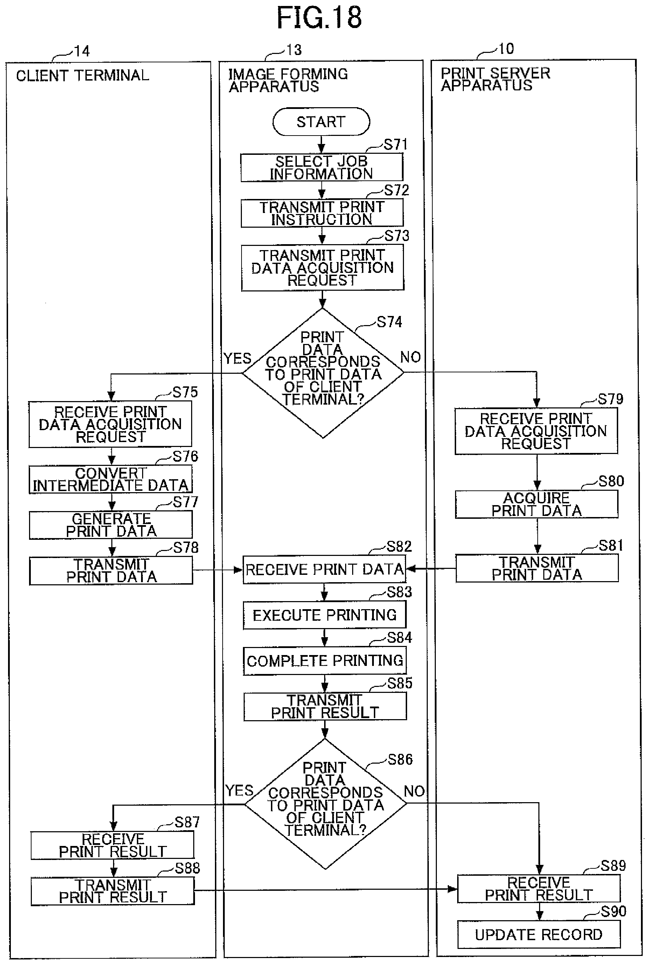

FIG. 18 is a flowchart illustrating an example of a print job output process according to the embodiment. In step S71, the job selection receiving part 45 of the image forming apparatus 13 receives the print job information selected by the user from the print job information list 1041 of the print job information list screen 1040 of FIG. 17.

In step S72, the job selection receiving part 45 receives a print instruction of the selected print job information received by the user's depression of the print button in step S71. In step S73, the job selection receiving part 45 transmits a print data acquisition request for the print job information associated with the received print instruction to the print data acquisition part 46.

In step S74, the print data acquisition part 46 determines whether the print data are accumulated in the client terminal 14 by using the print job information associated with the received print data acquisition request and the server ID set in the print job information. For example, the print data acquisition part 46 determines whether the print data are accumulated in the print server apparatus 10 or the client terminal 14 based on the server type of the server information.

When the print data acquisition part 46 determines that the print data are accumulated in the client terminal 14, the print data acquisition part 46 searches for the client terminal 14 that accumulate the print data based on the host name of the server information. The print data acquisition part 46 then transmits the print data acquisition request to the detected client terminal 14.

In step S75, the client terminal 14 receives the print data acquisition request from the image forming apparatus 13. In step S76, the print job manager 92 of the job accumulation plugin 72 in the client terminal 14 requests the real printer driver 63 to convert the intermediate format print data.

In step S77, the real printer driver 63 converts the intermediate format print data into the real format print data. The real printer driver 63 may use the settings of the setting screen 1000 illustrated in FIG. 11. In step S78, the server connection part 93 of the job accumulation plugin 72 transmits the real format print data to the image forming apparatus 13 serving as a print data acquisition request source.

On the other hand, in step S74, when the print data acquisition part 46 determines that the print data are accumulated in the print server apparatus 10, the print data acquisition part 46 of the image forming apparatus 13 transmits a print data acquisition request to the print server apparatus 10.

In step S79, the print server apparatus 10 receives the print data acquisition request from the image forming apparatus 13. In step S80, the print data provider 24 of the print server apparatus 10 acquires the real format print data requested by the image forming apparatus 13 from the print data holding part 27. In step S81, the print data provider 24 transmits the real format print data to the image forming apparatus 13 serving as the print data acquisition request source.

In step S82, the image forming apparatus 13 receives the real format print data from the print server apparatus 10 or the client terminal 14. In step S83, the print processor 48 of the image forming apparatus 13 execute printing of the received real format print data. In step S84, the print processor 48 completes the printing.

In step S85, the print processor 48 starts a transmission process of transmitting a print result of the real format print data. In step S86, the print processor 48 determines whether the real format print data are acquired from the print server apparatus 10 or the client terminal 14 based on a process similar to that in step S74.

When the print processor 48 determines that the real format print data are acquired from the client terminal 14, the print processor 48 transmits a print result of the print data to the client terminal 14. In step S87, the client terminal 14 receives the print result of the print data.

In step S88, the print job manager 92 of the job accumulation plugin 72 in the client terminal 14 deletes the print data based on the print result, and subsequently transmits the print result of the print data to the print server apparatus 10.

On the other hand, when the print processor 48 determines that the real format print data are acquired from the print server apparatus 10, the print processor 48 transmits a print result of the print data to the print server apparatus 10. In step S89, the print server apparatus 10 receives the print result of the print data. In step S90, the job registration processor 22 of the print server apparatus 10 performs a process such as deleting the print data or updating the print job information based on the print result of the received print data.

As illustrated in the flowchart of FIG. 18, the image forming apparatus 13 of the print system 1 according to the embodiment may be able to acquire the print data accumulated in the print server apparatus 10 or the client terminal 14 and print the acquired print data by following the common process. Further, when the print data are accumulated in the client terminal 14, the image forming apparatus 13 searches for the client terminal 14 based on the host name set in the server information, which may overcome a disadvantageous search process that uses dynamically changing information such as an IP address.

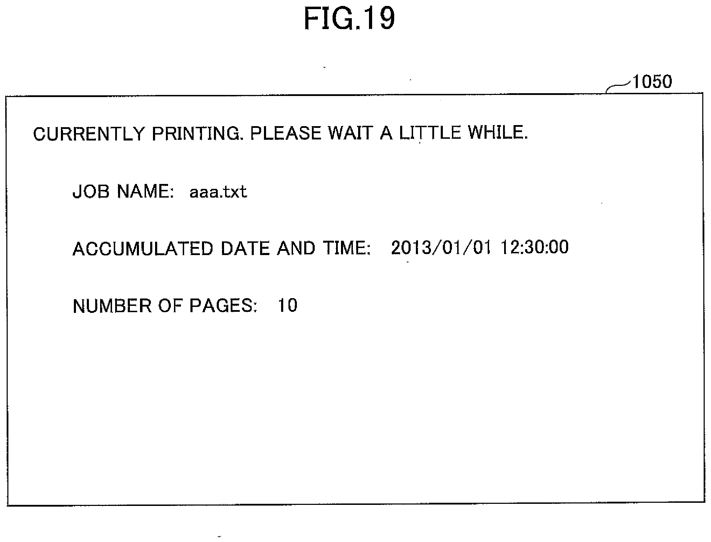

Note that in step S72, after receiving the print instruction of the print job information, the data display processor 42 of the image forming apparatus 13 may, for example, display a screen 1050 presenting a currently printing message illustrated in FIG. 19 on the operations panel 202.

FIG. 19 is an image diagram illustrating an example of the screen 1050 presenting a currently printing message. The screen 1050 presenting a currently printing message of FIG. 19 includes a document name of the currently printing print data, date and time at which the accumulation process is performed, and the number of pages. Hence, the user may be able to check content of the currently printing print job.

### PREVENTION PROCESS FOR UNAUTHORIZED ACQUISITION OF PRINT DATA

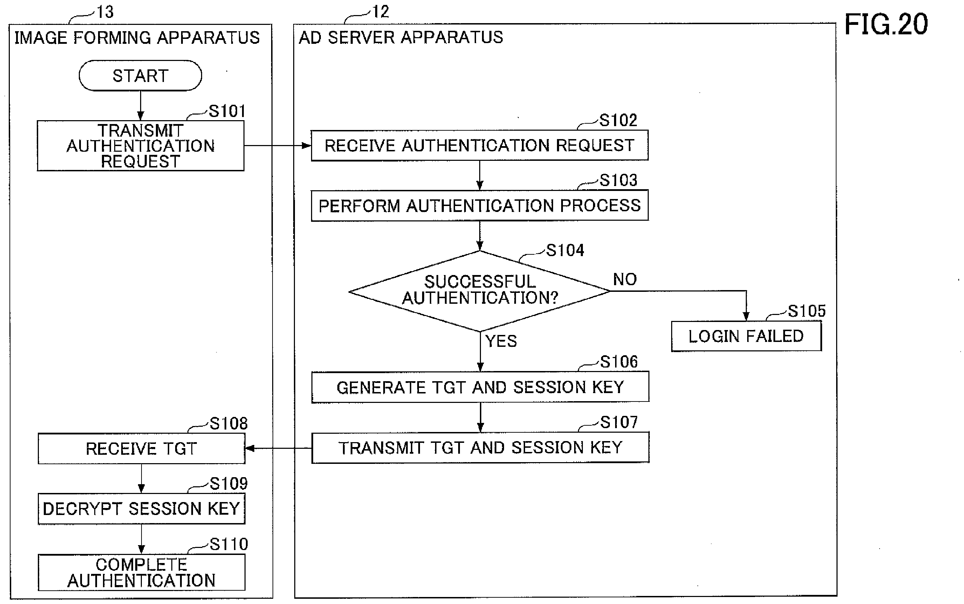

According to the print system 1 in the embodiment, in the login process in FIG. 15, a ticket granting ticket (hereinafter called "TGT") for preventing unauthorized acquisition of the print data caused by spoofing may be acquired as illustrated in FIG. 20. FIG. 20 is a flowchart illustrating an example of a TGT acquisition process in the image forming apparatus 13.

In step S101, the operations receiver 41 of the image forming apparatus 13 receives the authentication information such as the user name, the password, and the like input by the user into the login screen. The login processor 43 of the image forming apparatus 13 transmits the received authentication information to the AD server apparatus 12.

In step S102, the AD server apparatus 12 receives the authentication information from the image forming apparatus 13. In step S103, the authentication server of the AD server apparatus 12 performs an authentication process on the authentication information received from the image forming apparatus 13.

When the authentication fails ("NO" in step S104), the authentication server of the AD server apparatus 12 determines that the login has failed in step S105. When the authentication is successful ("YES" in step S104), the authentication server of the AD server apparatus 12 proceeds with step S106 to generate a TGT and a session key including expiration date of the TGT.

In step S107, the authentication server of the AD server apparatus 12 encrypts the TGT with a key held by the ticket granting server, and encrypts the session key with a key held by the image forming apparatus 13. The authentication server of the AD server apparatus 12 transmits the encrypted TGT and session key to the image forming apparatus 13.

In step S108, the login processor 43 of the image forming apparatus 13 receives the encrypted TGT and session key from the AD server apparatus 12. In step S109, the login processor 43 of the image forming apparatus 13 decrypts the session key encrypted by the AD server apparatus 12 to acquire the session key. Note that the key used for encrypting the session kay may be the user's password, the user's public key, and the like. Subsequently, in step S110, the login processor 43 of the image forming apparatus 13 completes the authentication.

In the TGT acquisition process in FIG. 20, the image forming apparatus 13 serving as a principal transmits a ticket request to the authentication server to acquire the TGT encrypted with the key held by the ticket granting server in Kerberos authentication. After the acquisition of the TGT, the image forming apparatus 13 is able to use the TGT, and hence, the image forming apparatus 13 no longer requires the authentication process using the authentication information such as the user name, the password, and the like.

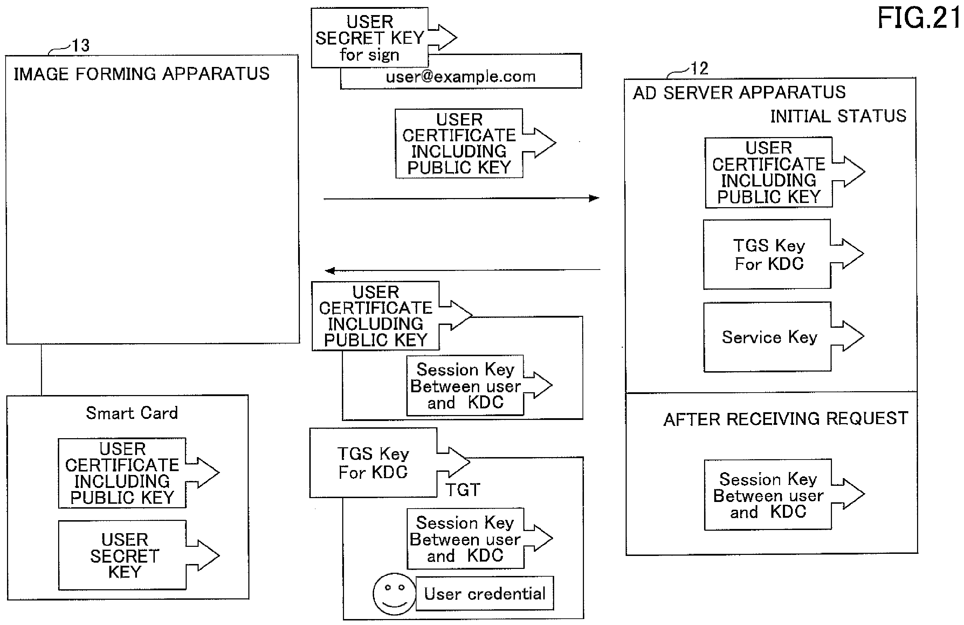

An example of the TGT acquisition process in the flowchart of FIG. 20 may be depicted in FIG. 21. FIG. 21 is an image diagram illustrating an example of the TGT acquisition process in the image forming apparatus 13.

The operations receiver 41 of the image forming apparatus 13 transmits a user's certificate including a public key serving as an example of the authentication information to the AD server apparatus 12. FIG. 21 illustrates an example in which the image forming apparatus 13 acquires the user's certificate and the user's secret key from a smart card serving as an example of the recording medium 203a.

Note that in the initial status, the authentication server of the AD server apparatus 12 includes a key (TGS Key For KDC) held by the ticket granting server, and a key (Service Key) held by the print server apparatus 10 or the client terminal 14.

The authentication server of the AD server apparatus 12 performs an authentication process on the user's certificate received from the image forming apparatus 13, and generates, when the authentication is successful, a session key (Session Key Between user and KDC) encrypted with the user's certificate, and TGT encrypted with the key held by the ticket granting server. The TGT includes the session key and credentials (credit information) configured to guarantee that the user subject to authentication is a correct user.

The authentication server of the AD server apparatus 12 transmits the encrypted TGT and the session key to the image forming apparatus 13. The image forming apparatus 13 receives the encrypted TGT and session key. The image forming apparatus 13 may be able to decrypt the session key encrypted by the AD server apparatus 12 to acquire the session key.

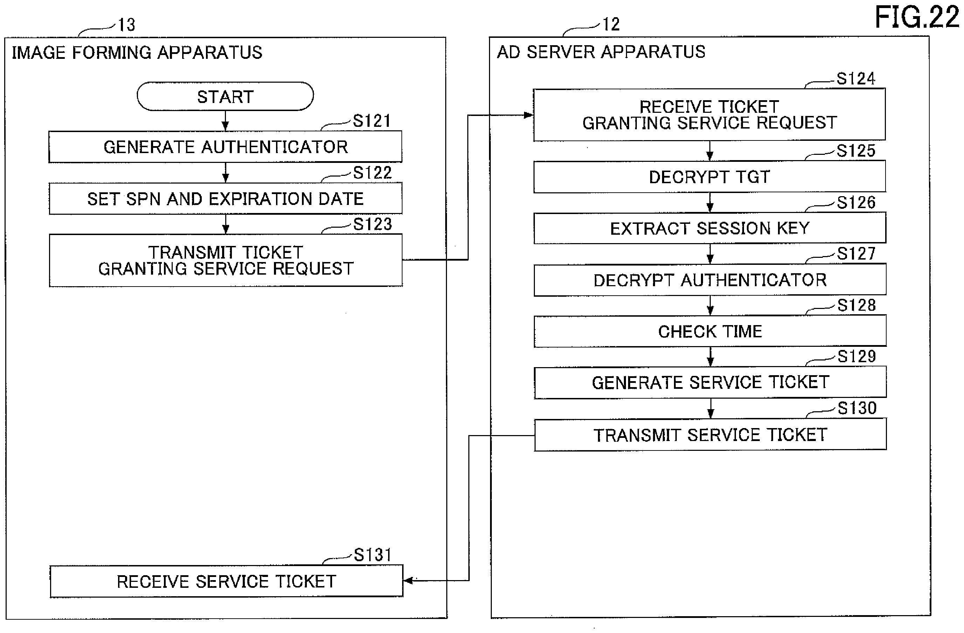

In the print system 1 according to the embodiment, a service ticket (TGS) indicating access authorization with respect to the print server apparatus 10 or the client terminal 14 may be acquired by using the TGT as illustrated, for example, in FIG. 22. FIG. 22 is a flowchart illustrating an example of a service ticket acquisition process in the image forming apparatus 13.

In step S121, the image forming apparatus 13 generates an authenticator uniquely identifying a client based on the time and user principal information. Note that the user principal information is configured to uniquely identify the user on the AD (Active Directory). The image forming apparatus 13 encrypts the generated authenticator with the session key acquired in the TGT acquisition process.

Further, in step S122, the image forming apparatus 13 sets a service principal name associated with a service registered on the AD by the print server apparatus 10 or the client terminal 14, and expiration date of the service ticket to be acquired. In step S123, the image forming apparatus 13 transmits a ticket granting service request to the ticket granting server of the AD server apparatus 12.

The ticket granting service request includes the encrypted authenticator, the TGT encrypted with the key held by the ticket granting server, the set service principal name, and the expiration date of the service ticket to be acquired.

In step S124, the ticket granting server of the AD server apparatus 12 receives the ticket granting service request. In step S125, the ticket granting server of the AD server apparatus 12 decrypts the encrypted TGT with the key held by itself (the AD server apparatus 12) to perform an authentication process on the TGT. When the authentication process of TGT is successful, the ticket granting server of the AD server apparatus 12 extracts the session key from the TGT in step S126.

In step S127, the ticket granting server of the AD server apparatus 12 decrypts the encrypted authenticator included in the ticket granting service request using the extracted session key. In step S128, the ticket granting server of the AD server apparatus 12 also checks the time. The above-described processes enable the ticket granting server of the AD server apparatus 12 to specify the user.

In step S129, the ticket granting server of the AD server apparatus 12 generates a service ticket associated with a service registered on the active directory (AD) by the print server apparatus 10 or the client terminal 14. The ticket granting server of the AD server apparatus 12 encrypts the service ticket with a key held by the print server apparatus 10 or the client terminal 14. Further, the ticket granting server encrypts a session key of the print server apparatus 10 or the client terminal 14 with the session key acquired by the image forming apparatus 13 in the TGT acquisition process.

In step S130, the ticket granting server of the AD server apparatus 12 transmits the encrypted service ticket, and the session key of the print server apparatus 10 or the client terminal 14 to the image forming apparatus 13. In step S131, the login processor 43 of the image forming apparatus 13 receives the encrypted service ticket and the session key of the print server apparatus 10 or the client terminal 14 from the AD server apparatus 12.

The login processor 43 of the image forming apparatus 13 decrypts the session key of the print server apparatus 10 or the client terminal 14 encrypted by the AD server apparatus 12 to acquire the session key of the print server apparatus 10 or the client terminal 14.

In the service ticket acquisition process illustrated in FIG. 22, the image forming apparatus 13 serving as the principal transmits the TGT to request the service ticket, and subsequently acquires the service ticket encrypted with the key held by the print server apparatus 10 or the like. After the acquisition of the service ticket, the image forming apparatus 13 converts the service ticket into an authentication token, and provides the authentication token while performing communications with the print server apparatus 10 or the client terminal 14, thereby verifying a correct user.

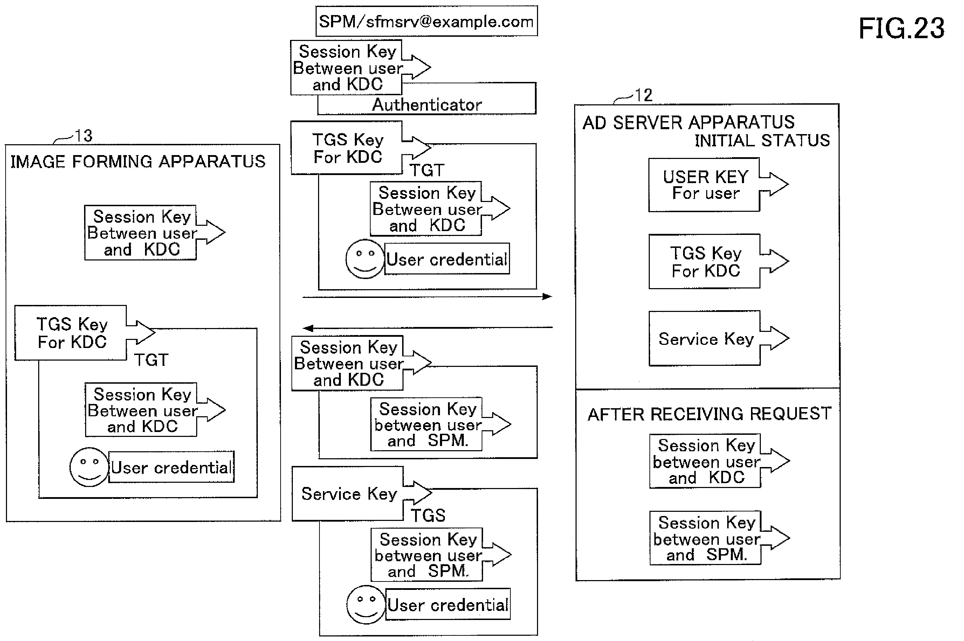

An example of the service ticket acquisition process in the flowchart of FIG. 22 may be depicted in FIG. 23. FIG. 23 is an image diagram illustrating an example of the service ticket acquisition process in the image forming apparatus 13.

The image forming apparatus 13 encrypts the time and the authenticator generated from the user principal information with the session key acquired in the TGT acquisition process. The image forming apparatus 13 transmits the encrypted authenticator, and the ticket granting service request including the TGT encrypted with the key held by the ticket granting server to the ticket granting server of the AD server apparatus 12.

The ticket granting server of the AD server apparatus 12 decrypts the encrypted TGT with the key held by itself (the AD server apparatus 12) to perform an authentication process on the TGT. When the authentication process of TGT is successful, the ticket granting server of the AD server apparatus 12 extracts the session key from the TGT.

The ticket granting server of the AD server apparatus 12 decrypts the encrypted authenticator included in the ticket granting service request using the extracted session key to specify the user. The ticket granting server of the AD server apparatus 12 generates a service ticket associated with a service registered on the active directory (AD) by the print server apparatus 10 or the client terminal 14.

The ticket granting server of the AD server apparatus 12 encrypts the service ticket with a key held by the print server apparatus 10 or the client terminal 14. Further, the ticket granting server encrypts a session key (Session Key Between user and SPM) of the print server apparatus 10 or the client terminal 14 with the session key acquired by the image forming apparatus 13 in the TGT acquisition process.

The ticket granting server of the AD server apparatus 12 transmits the encrypted service ticket, and the session key of the print server apparatus 10 or the client terminal 14 to the image forming apparatus 13. The ticket granting server of the AD server apparatus 12 receives the encrypted service ticket, and the session key of the print server apparatus 10 or the client terminal 14 from the AD server apparatus 12.

The image forming apparatus 13 decrypts the session key of the print server apparatus 10 or the client terminal 14 encrypted by the AD server apparatus 12 to acquire the session key of the print server apparatus 10 or the client terminal 14.

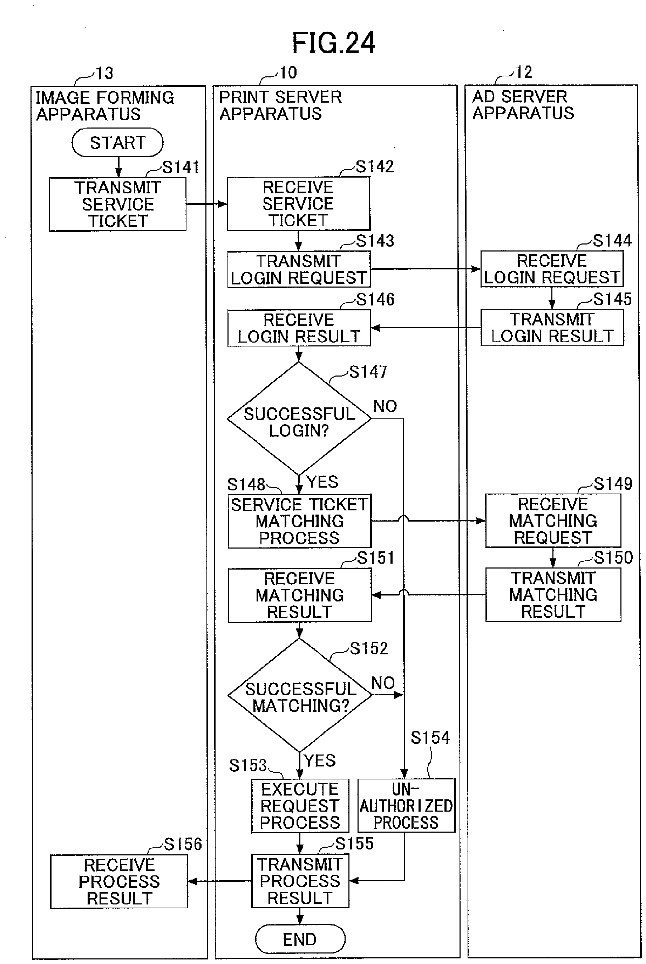

In the print system 1 of the embodiment, the print server apparatus 10 that has received the authentication token may, for example, perform a process as illustrated in FIG. 24. FIG. 24 is a flowchart illustrating an example of an authentication token matching process in the print server apparatus 10.

In step S141, the image forming apparatus 13 provides the service ticket encrypted with the key held by the print server apparatus 10 and the authenticator encrypted with the session key of the print server apparatus 10 as an authentication token to request the print server apparatus 10 to perform the process.

In step S142, the print server apparatus 10 receives the encrypted service ticket, and decrypts the received service ticket with the key held by itself (the print server apparatus 10) to acquire the service ticket. In step S143, the login processor 28 of the print server apparatus 10 transmits a login request to the AD server apparatus 12 by using a previously generated keytab file.

The keytab file is used by the print server apparatus 10 to verify that the service provided by itself (the print server apparatus 10) is appropriate service to the active directory (AD). The print server apparatus 10 may be able to transmit a login request to the AD server apparatus 12 by using the keytab file registering a service provided by the print server apparatus 10 itself in advance on the active directory (AD). The login processor 28 of the print server apparatus 10 performs the login request with the user name determined at the registration of the service principal name.

In step S144, the authentication server of the AD server apparatus 12 receives the login request from the print server apparatus 10. In step S145, the authentication server of the AD server apparatus 12 performs the login process in response to the received login request to verify whether the keytab file is authorized or unauthorized one.

When the AD server apparatus 12 verifies that the keytab file is an authorized one, the AD server apparatus 12 transmits a login result representing the successful login to the print server apparatus 10. On the other hand, when the AD server apparatus 12 verifies that the keytab file is an unauthorized one, the AD server apparatus 12 transmit a login result representing the unsuccessful login (login failure) to the print server apparatus 10.

In step S146, the login processor 28 of the print server apparatus 10 receives the login result. When the login processor 28 of the print server apparatus 10 receives the login result representing the login failure ("NO" in step S147), the login processor 28 proceeds with step S154. In step S154, the login processor 28 determines that the requested login process is an unauthorized process. Then, in step S155, the login processor 28 transmits a process result representing the unauthorized process to the image forming apparatus 13. In step S156, the image forming apparatus receives the process result representing the unauthorized process.

On the other hand, when the login processor 28 receives the login result representing the successful login ("YES" in step S147), the login processor 28 proceeds with step S148. In step S148, the login processor 28 of the print server apparatus 10 performs a matching process of the service ticket acquired in step S142.

Specifically, the login processor 28 of the print server apparatus 10 extracts the session key of the print server apparatus 10 from the service ticket acquired in step S142. The login processor 28 decrypts the encrypted authenticator included in the service ticket acquired in step S142 by using the extracted session key of the print server apparatus 10.

The login processor 28 transmits a matching process to verify whether the decrypted authenticator is present in the active directory (AD) to authentication server of the AD server apparatus 12. In step S149, the authentication server of the AD server apparatus 12 receives the matching request of the authenticator. In step S150, the authentication server of the AD server apparatus 12 verifies whether the authenticator is present within the active directory (AD), and transmits, when the authenticator is present in the AD, a matching result representing successful matching to the print server apparatus 10. On the other hand, the authentication server of the AD server apparatus 12 transmits, when the authenticator is not present in the AD, a matching result representing unsuccessful matching (matching failure) to the print server apparatus 10.

In step S151, the login processor 28 of the print server apparatus 10 receives the matching result. When the login processor 28 receives the matching result representing the matching failure ("NO" in step S152), the login processor 28 proceeds with step S154. In step S154, the login processor 28 determines that the requested login process is an unauthorized process. Then, in step S155, the login processor 28 transmits a process result representing the unauthorized process to the image forming apparatus 13. In step S156, the image forming apparatus receives the process result representing the unauthorized process.

When the login processor 28 receives the matching result indicating the successful matching ("YES" in step S152), the login processor 28 proceeds with step S153. The print server apparatus 10 executes the process requested in step S142. Then, in step S155, the login processor 28 transmits a process result in step S153 to the image forming apparatus 13. In step S156, the image forming apparatus 13 receives the process result in step S153.

In the authentication token matching process in FIG. 24, the image forming apparatus 13 serving as a principal transmits the process request to the print server apparatus 10 using the service ticket. Note that FIG. 24 illustrates an example of the authentication token matching process in which the image forming apparatus 13 transmits the process request to the print server apparatus 10; however, the example also includes the authentication token matching process in which the image forming apparatus 13 transmits the process request to the client terminal 14. The authentication token matching process in FIG. 24 may enable the print system 1 of the embodiment to suppress spoofing attacks from malicious users.

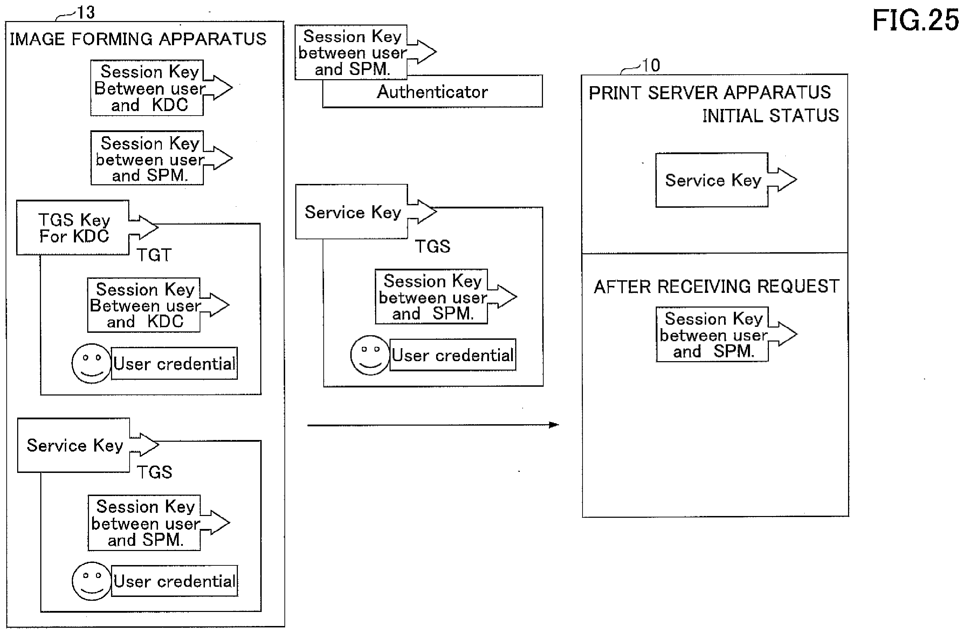

The transmission and reception processes of the session key in the print server apparatus 10 illustrated in the flowchart of DIF. 24 may be depicted in FIG. 25. FIG. 25 is an image diagram illustrating an example of the transmission and reception processes of the session key in the print server apparatus 10.

The image forming apparatus 13 transmits the service ticket encrypted with the key held by the print server apparatus 10 and the authenticator encrypted with the session key of the print server apparatus 10 as an authentication token to request the print server apparatus 10.

The print server apparatus 10 receives the encrypted service ticket, and decrypts the received service ticket with the key held by itself (the print server apparatus 10) to acquire the service ticket. Further, the print server apparatus 10 extracts the session key of the print server apparatus 10 from the acquired service ticket. The print server apparatus 10 decrypts the encrypted authenticator included in the service ticket by using the extracted session key of the print server apparatus 10.

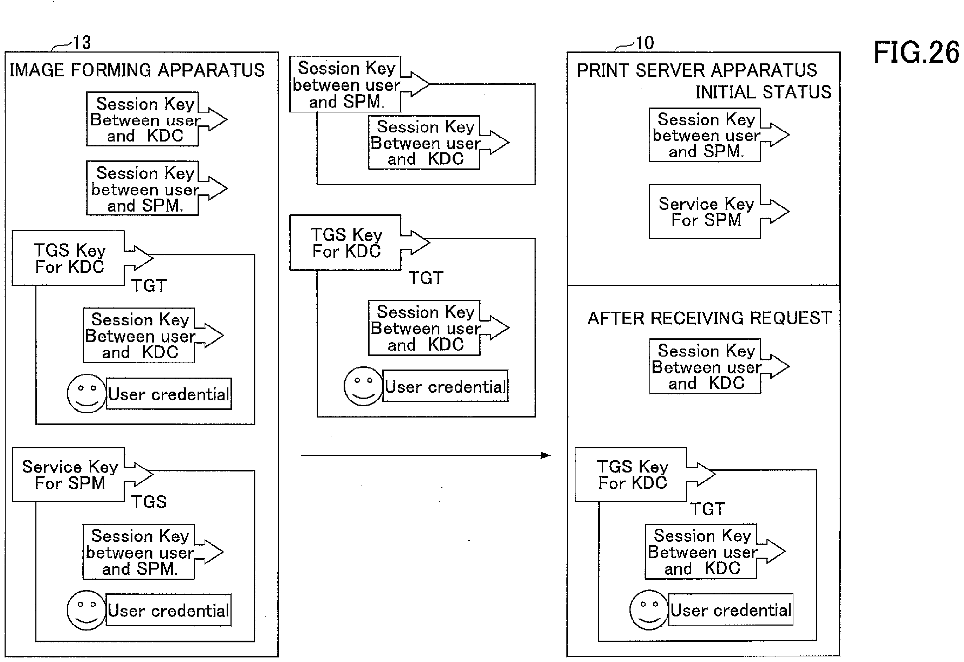

Note that the image forming apparatus 13 may be able to transfer the TGT and the session key (the session key acquired from the AD server apparatus 12 in FIG. 21) of the AD server apparatus 12 to the print server apparatus 10 as illustrated in FIG. 26. FIG. 26 is an image diagram illustrating an example of a process of transferring the TGT, and the session key of the AD server apparatus 12.

The image forming apparatus 13 transmits the session key of the AD server apparatus 12 encrypted with the session key of the print server apparatus 10, and the TGT encrypted with the key held by the ticket granting server to the print server apparatus 10. The print server apparatus 10 receives the session key of the AD server apparatus 12 encrypted with the session key of the print server apparatus 10, and the TGT encrypted with the key held by the ticket granting server.

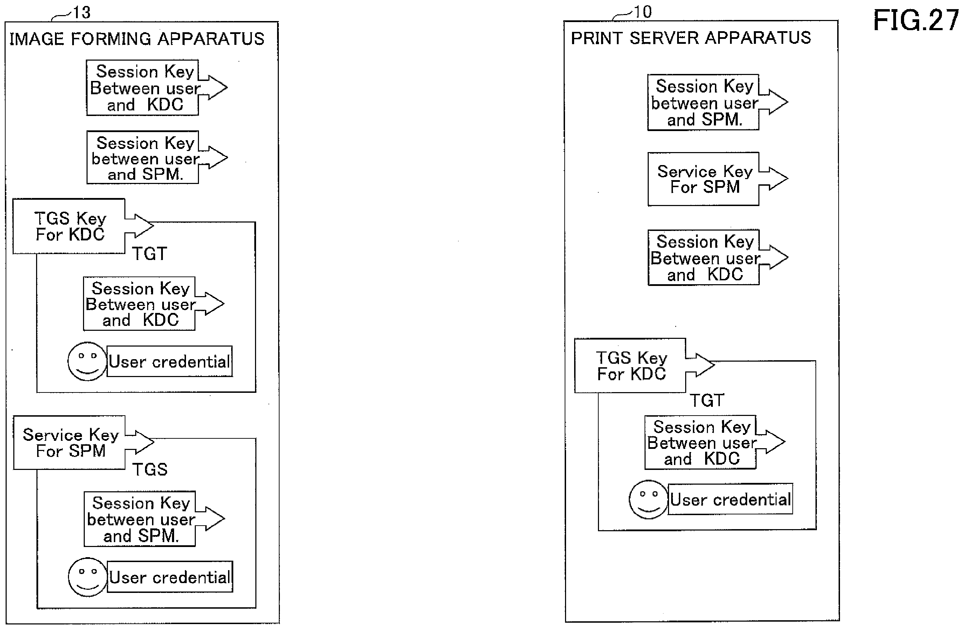

The print server apparatus 10 decrypts the session key of the AD server apparatus 12 encrypted with the session key of the print server apparatus 10 with the session key held by itself (the print server apparatus 10) to acquire the session key of the AD server apparatus 12. Note that when the transferring process of the TGT and the session key of the AD server apparatus 12 is completed, the print server apparatus 10 holds information illustrated in FIG. 27.

FIG. 27 is an image diagram illustrating an example of information held by the print server apparatus 10. The print server apparatus 10 in FIG. 27 holds the session key of the print server apparatus 10, the key held by the print server apparatus 10, the session key of the AD sever apparatus 12, and the TGT encrypted with the key held by the ticket granting server.

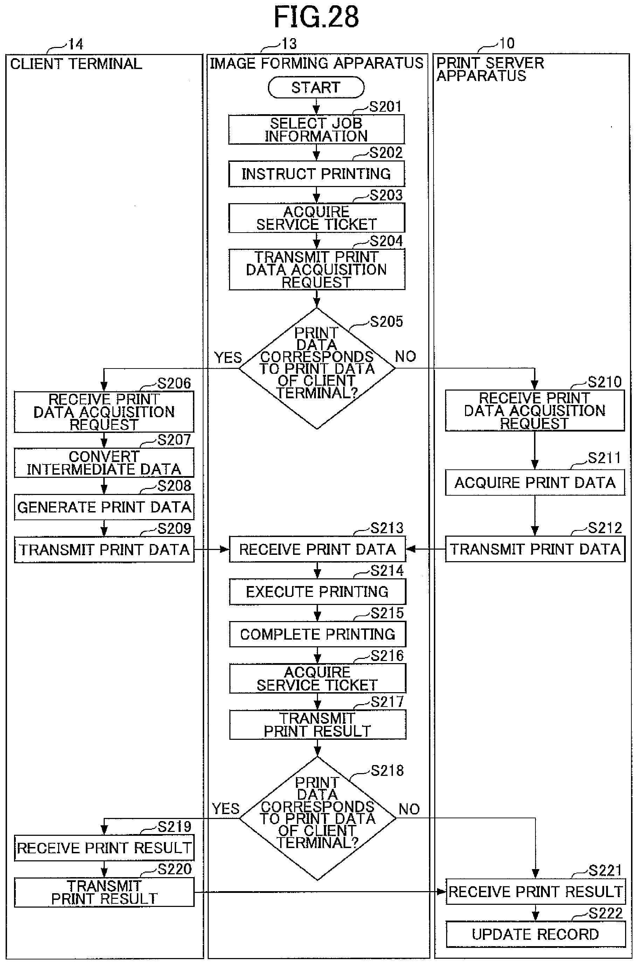

In the print system 1 of the embodiment, a service ticket acquisition process such as that illustrated in FIG. 22 may be added to the print job output process in FIG. 18 in order to prevent unauthorized print data acquisition by spoofing. FIG. 28 is a flowchart illustrating an example of the print job output process to which the service ticket acquisition process is added. Note that the flowchart in FIG. 28 is similar to the flowchart in FIG. 18 excluding some parts, an illustration of duplicated parts is omitted from the description.

In the flowchart of FIG. 28, the service ticket acquisition process is conducted prior to the communications with the print server apparatus 10 or the client terminal 14 (e.g., the transmission of the print data acquisition request in step S204, or the transmission of the print result in step S217). In the service ticket acquisition process in steps S203 and S201, the service ticket is acquired form the AD server apparatus 12 by the service ticket acquisition process illustrated in FIG. 22.

As described above, in the print system 1 of the embodiment, the image forming apparatus 13 acquires the service ticket from the AD server apparatus 12 every time the image forming apparatus 13 performs the communications with the print server apparatus 10 or the client terminal 14. Accordingly it may be able to lower risks of receiving spoofing attacks. Note that in the print system 1 of the embodiment, it may be considered that the above-described service ticket acquisition process is performed prior to the transmission process of the job information acquisition request, the print data acquisition request, the job information deletion request, or authorized or unauthorized job information operations.

Further, in the print system 1 of the embodiment, the encryption process of the print data may be performed by using the public key encryption system in the print data acquisition process. For example, as a response to the print data acquisition request in FIG. 28, the print server apparatus 10 or the client terminal 14 may be able to transmit the encrypted print data to the image forming apparatus 13. Hence, even though the unauthorized acquisition of the print data has been attempted, the print system 1 of the embodiment may be able to control risks of print data leakage by performing the encryption process of the print data.

In the print system 1 of the embodiment, the image forming apparatus 13 acquires unique authentication token every time the image forming apparatus 13 performs communications with the print server apparatus 10 or the client terminal 14, and attaches the acquired authentication token to the communications with the print server apparatus 10 or the client terminal 14. Then, the image forming apparatus 13 conducts a matching process and analysis on the authentication token attached to the communications with the print server apparatus 10 or the client terminal 14, and when the user is determined as a valid user, the image forming apparatus 13 subsequently transmits (returns) a communication response. Hence, the print system 1 of the embodiment may be able to prevent spoofing attacks by malicious users.

Note that the authentication token may be attached to header information of the communications request. Thus, it may be preferable to implement HTTPS communications using SSL since the print system 1 of the embodiment conceals the communications content.

### OUTLINE

The print system 1 according to the embodiment may be able to manage the print data accumulated in the print server apparatus 10 or the client terminal 14 based on the print job information registered in the print server apparatus 10. Accordingly, the print system 1 according to the embodiment may be able to reduce storage capacity required in the print server apparatus 10 by accumulating the print data in the client terminal 14. Further, the print system 1 according to the embodiment may be able to achieve TCO reduction in cost, such as introduction cost or maintenance cost. In addition, the print system 1 according to the embodiment may be able to prevent erroneous printing of the print jobs due to operational errors of the users caused by a large number of changeable print settings. Hence, the print system 1 according to the embodiment may be able to achieve TCO reduction.

In the print system 1 of the embodiment, the image forming apparatus 13 acquires a service ticket every time the image forming apparatus 13 performs communications with the print server apparatus 10 or the client terminal 14, and adds the acquired service ticket to the communications with the print server apparatus 10 or the client terminal 14. Since the print server apparatus 10 or the client terminal 14 may be able to determine the validity of the user based on the service ticket, it may be possible to prevent unauthorized print data acquisition attempted by the malicious users.

The present invention is not limited to examples or embodiments disclosed above. Various modifications or alteration may be made without departing from the scope of the claims of the present invention.

Note that the scope of the present invention is not limited to printing applications, and the above-described print system 1 is an example of an output system. Hence, the scope of the present invention is not limited to the output system that handles the print data or print job information alone. The client terminal 14 is an example of a terminal apparatus used by a user based on the instructions of the output request or output process of the output data.

The print server apparatus 10 is an example of an information processing apparatus that includes a validity determination request unit configured to transmit a validity determination request of certificate information to an authentication apparatus, and a process execution unit configured to perform a process in accordance with a request from an output apparatus when a validity determination result of the certificate information indicates that the certificate information being valid.

The AD server apparatus 12 is an example of an authentication apparatus that includes a certificate information providing unit configured to provide certificate information indicating access authorization to the output apparatus, and a validity determination result providing unit configured to receive the validity determination request of certification from one of a terminal apparatus and an information processing apparatus, and provide a validity determination result to a corresponding one of the terminal apparatus and the information processing apparatus.

The image forming apparatus 13 is an example of an output apparatus that includes a certificate request unit configured to transmit a certificate information providing request to the authentication apparatus, and a process request unit configured to transmit a process request to one of a terminal apparatus and an information processing apparatus by attaching certificate information provided from the authentication apparatus.

The print server apparatus 14 is an example of an information processing apparatus that includes a validity determination request unit configured to transmit a validity determination request of certificate information to an authentication apparatus, and a process execution unit configured to perform a process in response to a request from an output apparatus when a validity determination result of the certificate information indicates validity. The server information in FIG. 9 is an example of accumulation destination information.

According to the above-described embodiment, it is possible to prevent unauthorized acquisition of the data subject to outputting.

The present invention can be implemented in any convenient form, for example, using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device.

The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, a hard disk, a CD ROM, a magnetic tape device or a solid state memory device.

## Claims

1. An output system (1) comprising:
a terminal apparatus (14);
an output apparatus (13);
an authentication apparatus (12); and
an information processing apparatus (10), the terminal apparatus (14), the output apparatus (13), the authentication apparatus (12), and the information processing apparatus (10) being connected via a network, wherein
the authentication apparatus (12) includes
a certificate information providing unit configured to provide the output apparatus with certificate information indicating access authorization for authorizing the output apparatus (13) to use one of the terminal apparatus (14) and the information processing apparatus (10); and
a validity determination result providing unit configured to receive a validity determination request of the certificate information from the one of the terminal apparatus (14) and the information processing apparatus (10), and provide a validity determination result of the certificate information to a corresponding one of the terminal apparatus (14) and the information processing apparatus (10); wherein
the information processing apparatus (10) includes
a registration process unit configured to register an output request of data subject to outputting received from the terminal apparatus (14);
an accumulation destination information holding unit configured to hold accumulation information for determining an accumulation destination of the data subject to output; and
a providing process unit configured to provide an output request of the data subject to outputting and the accumulation information in response to the request from the output apparatus (13); wherein
the output apparatus (13) includes
a certificate information request unit configured to transmit a certificate information providing request to request the authentication apparatus (12) to provide the certificate information; and
a process request unit configured to transmit a process request to the corresponding one of the terminal apparatus (14) and the information processing apparatus (10) by attaching the certificate information provided from the authentication apparatus (12) to the process request;
a selection receiving unit configured to receive the selected output request of the data subject to outputting from the user;
an output target data acquisition unit configured to transmit to one of the terminal apparatus (14) and the information processing apparatus (10) an acquisition request of the data subject to outputting to which the certificate information provided from the authentication apparatus (12) is attached, and acquire the data subject to outputting from the corresponding one of the terminal apparatus (14) and the information processing apparatus (10), the corresponding one of the terminal apparatus (14) and the information processing apparatus (10) being determined as the accumulation destination of the data subject to outputting corresponding to the selected output request based on the accumulation destination information; and
an output process unit configured to output the acquired data subject to outputting;
and wherein
each of the terminal apparatus (14) and the information processing apparatus (10) includes
a validity determination request unit configured to transmit a validity determination request of the certificate information attached to the process request from the output apparatus (13) to the authentication apparatus (12); and
a process execution unit configured to perform a process in accordance with the process request from the output apparatus (13) upon receiving the validity determination result of the certificate information provided from the authentication apparatus (12) indicating that the certificate information is valid.

2. The output system (1) as claimed in claim 1, wherein
the output apparatus (13) transmits the certificate information providing request to the authentication apparatus (12) every time the output apparatus (13) transmits the process request to the corresponding one of the terminal apparatus (14) and the information processing apparatus (10).

3. The output system as claimed in claim 1 or 2, wherein
the authentication apparatus (12) performs Kerberos authentication.

4. An output method executed in an output system (1), the output system (1) including a terminal apparatus (14), an output apparatus (13), an authentication apparatus (12), and an information processing apparatus (10) that are connected via a network, the output method comprising:
causing the output apparatus (13) to transmit a certificate information request to the authentication apparatus (12);
causing the authentication apparatus (12) to provide the output apparatus (13) with certificate information indicating access authorization to one of the terminal apparatus (14) and the information processing apparatus (10);
causing the output apparatus (13) to attach the certificate information provided from the authentication apparatus (12) to a process request and transmit the process request to the corresponding one of the terminal apparatus (14) and the information processing apparatus (10);
causing the corresponding one of the terminal apparatus (14) and the information processing apparatus (10) to transmit a validity determination request of the certificate information attached to the process request from the output apparatus (13) to the authentication apparatus (12);
causing the authentication apparatus (12) to receive a validity determination request of the certificate information from the corresponding one of the terminal apparatus (14) and the information processing apparatus (10), and provide a validity determination result of the certificate information to the corresponding one of the terminal apparatus (14) and the information processing apparatus (10); and
causing the corresponding one of the terminal apparatus (14) and the information processing apparatus (10) to perform a process in accordance with the process request from the output apparatus (13) upon receiving the validity determination result indicating that the certificate information provided from the authentication apparatus (12) is valid, wherein
the information processing apparatus is caused
to register an output request of data subject to outputting received from the terminal apparatus (14),
to hold accumulation information for determining an accumulation destination of the data subject to output, and
to provide an output request of the data subject to outputting and the accumulation information in response to the process request from the output apparatus (13), and wherein
the output apparatus (13) is caused
to receive the selected output request of the data subject to outputting from the user,
to transmit to one of the terminal apparatus (14) and the information processing apparatus (10) an acquisition request of the data subject to outputting to which the certificate information provided from the authentication apparatus (12) is attached, and acquire the data subject to outputting from the corresponding one of the terminal apparatus (14) and the information processing apparatus, the corresponding one of the terminal apparatus (14) and the information processing apparatus (10) being determined as the accumulation destination of the data subject to outputting corresponding to the selected output request based on the accumulation destination information, and
to output the acquired data subject to outputting.

5. The output method as claimed in claim 4, wherein
the certificate providing request is transmitted to the authentication apparatus (12) every time the output apparatus (13) transmits the process request to the corresponding one of the terminal apparatus (14) and the information processing apparatus (10).

6. The output method as claimed in claim 4 or 5, wherein
the authentication apparatus (12) performs Kerberos authentication.

## Patentansprüche

1. Ausgabesystem (1), das Folgendes umfasst:
eine Endgerätvorrichtung (14);
eine Ausgabevorrichtung (13);
eine Authentifizierungsvorrichtung (12); und
eine Datenverarbeitungsvorrichtung (10), wobei die Endgerätvorrichtung (14), die Ausgabevorrichtung (13), die Authentifizierungsvorrichtung (12) und die Datenverarbeitungsvorrichtung (10) über ein Netz verbunden sind, wobei
die Authentifizierungsvorrichtung (12) umfasst:
eine Zertifikatinformationsliefereinheit, die konfiguriert ist, der Ausgabevorrichtung Zertifikatinformationen zu liefern, die eine Zugriffsautorisierung zum Autorisieren der Ausgabevorrichtung (13), eine der Endgerätvorrichtung (14) und der Datenverarbeitungsvorrichtung (10) zu verwenden, angeben; und
eine Gültigkeitsbestimmungsergebnisliefereinheit, die konfiguriert ist, eine Gültigkeitsbestimmungsanforderung der Zertifikatinformationen von der einen der Endgerätvorrichtung (14) und der Datenverarbeitungsvorrichtung (10) zu empfangen, und ein Gültigkeitsbestimmungsergebnis der Zertifikatinformationen an eine entsprechende der Endgerätvorrichtung (14) und der Datenverarbeitungsvorrichtung (10) zu liefern; wobei
die Datenverarbeitungsvorrichtung (10) enthält:
eine Registrierungsprozesseinheit, die konfiguriert ist, eine von der Endgerätvorrichtung (14) empfangene Ausgabeanforderung von Daten, die Gegenstand einer Ausgabe sind, zu registrieren;
eine Ansammlungsbestimmungsortsinformationshalteeinheit, die konfiguriert ist, Ansammlungsinformationen zum Bestimmen eines Ansammlungsbestimmungsorts der Daten, die Gegenstand einer Ausgabe sind, zu halten; und
eine Lieferprozesseinheit, die konfiguriert ist, eine Ausgabeanforderung der Daten, die Gegenstand einer Ausgabe sind, und die Ansammlungsinformationen als Reaktion auf die Anforderung von der Ausgabevorrichtung (13) zu liefern; wobei
die Ausgabevorrichtung (13) enthält:
eine Zertifikatinformationsanforderungseinheit, die konfiguriert ist, Zertifikatinformationen, die eine Anforderung liefern, die Authentifizierungsvorrichtung (12) aufzufordern, die Zertifikatinformationen zu liefern, zu senden; und
eine Prozessanforderungseinheit, die konfiguriert ist, eine Prozessanforderung an die entsprechende der Endgerätvorrichtung (14) und der Datenverarbeitungsvorrichtung (10) durch Anhängen der von der Authentifizierungsvorrichtung (12) gelieferten Zertifikatinformationen an die Prozessanforderung zu senden;
eine Auswahlempfangseinheit, die konfiguriert ist, die ausgewählte Ausgabeanforderung der Daten, die Gegenstand einer Ausgabe sind, von dem Anwender zu empfangen;
eine Ausgabezieldatenerfassungseinheit, die konfiguriert ist, an eine der Endgerätvorrichtung (14) und der Datenverarbeitungsvorrichtung (10) eine Erfassungsanforderung der Daten, die Gegenstand einer Ausgabe sind, an die die von der Authentifizierungsvorrichtung (12) gelieferten Zertifikatinformationen angehängt sind, zu senden und die Daten, die Gegenstand einer Ausgabe sind, von der entsprechenden der Endgerätvorrichtung (14) und der Datenverarbeitungsvorrichtung (10) zu erfassen, wobei die entsprechende der Endgerätvorrichtung (14) und der Datenverarbeitungsvorrichtung (10) als der Ansammlungsbestimmungsort der Daten, die Gegenstand einer Ausgabe sind, entsprechend der ausgewählten Ausgabeanforderung anhand der Ansammlungsbestimmungsortsinformationen bestimmt ist; und
eine Ausgabeprozesseinheit, die konfiguriert ist, die erfassten Daten, die Gegenstand einer Ausgabe sind, auszugeben;
und wobei die Endgerätvorrichtung (14) und die Datenverarbeitungsvorrichtung (10) enthalten:
eine Gültigkeitsbestimmungsanforderungseinheit, die konfiguriert ist, eine Gültigkeitsbestimmungsanforderung der an die Prozessanforderung angehängten Zertifikatinformationen von der Ausgabevorrichtung (13) an die Authentifizierungsvorrichtung (12) zu senden; und
eine Prozessausführungseinheit, die konfiguriert ist, einen Prozess in Übereinstimmung mit der Prozessanforderung von der Ausgabevorrichtung (13) beim Empfangen des Gültigkeitsbestimmungsergebnisses der von der Authentifizierungsvorrichtung (12) gelieferten Zertifikatinformationen, die angeben, dass die Zertifikatinformationen gültig sind, auszuführen.

2. Ausgabesystem (1) nach Anspruch 1, wobei
die Ausgabevorrichtung (13) die Zertifikatinformationslieferanforderung an die Authentifizierungsvorrichtung (12) jedes Mal dann liefert, wenn die Ausgabevorrichtung (13) die Prozessanforderung an die entsprechende der Endgerätvorrichtung (14) und der Datenverarbeitungsvorrichtung (10) sendet.

3. Ausgabesystem nach Anspruch 1 oder 2, wobei
die Authentifizierungsvorrichtung (12) eine Kerberos-Authentifizierung ausführt.

4. Ausgabeverfahren, das in einem Ausgabesystem (1) ausgeführt wird, wobei das Ausgabesystem (1) eine Endgerätvorrichtung (14), eine Ausgabevorrichtung (13), eine Authentifizierungsvorrichtung (12) und eine Datenverarbeitungsvorrichtung (10) enthält, die über ein Netz verbunden sind, wobei das Ausgabeverfahren umfasst:
Bewirken, dass die Ausgabevorrichtung (13) eine Zertifikatinformationsanforderung an die Authentifizierungsvorrichtung (12) sendet;
Bewirken, dass die Authentifizierungsvorrichtung (12) der Ausgabevorrichtung (13) Zertifikatinformationen liefert, die eine Zugriffsautorisierung auf die Endgerätvorrichtung (14) oder die Datenverarbeitungsvorrichtung (10) angeben;
Bewirken, dass die Ausgabevorrichtung (13) die von der Authentifizierungsvorrichtung (12) gelieferten Zertifikatinformationen an eine Prozessanforderung anhängt und die Prozessanforderung an die entsprechende der Endgerätvorrichtung (14) und der Datenverarbeitungsvorrichtung (10) sendet;
Bewirken, dass die entsprechende der Endgerätvorrichtung (14) und der Datenverarbeitungsvorrichtung (10) eine Gültigkeitsbestimmungsanforderung der an die Prozessanforderung angehängten Zertifikatinformationen von der Ausgabevorrichtung (13) an die Authentifizierungsvorrichtung (12) sendet;
Bewirken, dass die Authentifizierungsvorrichtung (12) eine Gültigkeitsbestimmungsanforderung der Zertifikatinformationen von der entsprechenden der Endgerätvorrichtung (14) und der Datenverarbeitungsvorrichtung (10) empfängt und ein Gültigkeitsbestimmungsergebnis der Zertifikatinformationen an die entsprechende der Endgerätvorrichtung (14) und der Datenverarbeitungsvorrichtung (10) sendet; und
Bewirken, dass die entsprechende der Endgerätvorrichtung (14) und der Datenverarbeitungsvorrichtung (10) einen Prozess in Übereinstimmung mit der Prozessanforderung von der Ausgabevorrichtung (13) beim Empfangen des Gültigkeitsbestimmungsergebnisses ausführt, das angibt, dass die von der Authentifizierungsvorrichtung (12) gelieferten Zertifikatinformationen gültig sind, wobei
bewirkt wird, dass die Datenverarbeitungsvorrichtung
eine von der Endgerätvorrichtung (14) empfangene Ausgabeanforderung von Daten, die Gegenstand einer Ausgabe sind, registriert,
Ansammlungsinformationen zum Bestimmen einer Ansammlungsbestimmungsort der Daten, die Gegenstand einer Ausgabe sind, hält und
eine Ausgabeanforderung der Daten, die Gegenstand einer Ausgabe sind, und die Ansammlungsinformationen als Reaktion auf die Prozessanforderung von der Ausgabevorrichtung (13) liefert und wobei
bewirkt wird, dass die Ausgabevorrichtung (13)
die ausgewählte Ausgabeanforderung der Daten, die Gegenstand einer Ausgabe sind, von dem Anwender empfängt,
eine Erfassungsanforderung der Daten, die Gegenstand einer Ausgabe sind, an die die von der Authentifizierungsvorrichtung (12) gelieferten Zertifikatinformationen angehängt sind, an eine der Endgerätvorrichtung (14) und der Datenverarbeitungsvorrichtung sendet und die Daten, die Gegenstand einer Ausgabe sind, von der entsprechenden der Endgerätvorrichtung (14) und der Datenverarbeitungsvorrichtung erfasst, wobei die entsprechende der Endgerätvorrichtung (14) und der Datenverarbeitungsvorrichtung (10) als der Ansammlungsbestimmungsort der Daten, die Gegenstand einer Ausgabe sind, entsprechend der ausgewählten Ausgabeanforderung anhand der Ansammlungsbestimmungsortsinformationen bestimmt ist, und
die erfassten Daten, die Gegenstand einer Ausgabe sind, ausgibt.

5. Ausgabeverfahren nach Anspruch 4, wobei
die Zertifikatslieferanforderung an die Authentifizierungsvorrichtung (12) jedes Mal dann gesendet wird, wenn die Ausgabevorrichtung (13) die Prozessanforderung an die entsprechende der Endgerätvorrichtung (14) und der Datenverarbeitungsvorrichtung (10) sendet.

6. Ausgabeverfahren nach Anspruch 4 oder 5, wobei
die Authentifizierungsvorrichtung (12) eine Kerberos-Authentifizierung ausführt.

## Revendications

1. Système d'émission (1) comprenant :
un appareil terminal (14) ;
un appareil d'émission (13) ;
un appareil d'authentification (12) ; et
un appareil de traitement d'informations (10), l'appareil terminal (14), l'appareil d'émission (13), l'appareil d'authentification (12) et l'appareil de traitement d'informations (10) étant connectés par le biais d'un réseau,
l'appareil d'authentification (12) comprenant
une unité de production d'informations de certificat conçue pour produire l'appareil de sortie avec des informations de certificat indiquant une autorisation d'accès pour autoriser l'appareil d'émission (13) à utiliser l'appareil terminal (14) ou l'appareil de traitement d'informations (10) ; et
une unité de production de résultat de détermination de validité conçue pour recevoir une demande de détermination de validité des informations de certificat dudit appareil terminal (14) ou dudit appareil de traitement d'informations (10), et fournir un résultat de détermination de validité des informations de certificat à un appareil correspondant parmi l'appareil terminal (14) et l'appareil de traitement d'informations (10) ;
l'appareil de traitement d'informations (10) comprenant :
une unité de processus d'enregistrement conçue pour enregistrer une demande d'émission de données soumises à une émission reçue depuis l'appareil terminal (14) ;
une unité de conservation d'informations de destination d'accumulation conçue pour conserver des informations d'accumulation destinées à déterminer une destination d'accumulation des données soumises à une émission ; et
une unité de processus de production conçue pour produire une demande d'émission des données soumises à une émission et les informations d'accumulation en réponse à la demande depuis l'appareil d'émission (13) ;
l'appareil d'émission (13) comprenant
une unité de demande d'informations de certificat conçue pour transmettre une demande de production d'informations de certificat pour demander à l'appareil d'authentification (12) de produire les informations de certificat ; et
une unité de demande de processus conçue pour transmettre une demande de processus à un appareil correspondant parmi l'appareil terminal (14) et l'appareil de traitement d'informations (10) enjoignant les informations de certificat fournies par l'appareil d'authentification (12) à la demande de processus ;
une unité de réception de sélection conçue pour recevoir la demande d'émission sélectionnée des données soumises à une émission provenant de l'utilisateur ;
une unité d'acquisition de données cibles d'émission conçue pour transmettre à l'appareil terminal (14) ou l'appareil de traitement d'informations (10) une demande d'acquisition des données soumises à une émission à laquelle les informations de certificat fournies par l'appareil d'authentification (12) sont jointes, et acquérir les données soumises à une émission depuis l'appareil correspondant parmi l'appareil terminal (14) et l'appareil de traitement d'informations (10), l'appareil correspondant parmi l'appareil terminal (14) et l'appareil de traitement d'informations (10) étant déterminé comme destination d'accumulation des données soumises à une émission correspondant à la demande d'émission sélectionnée en fonction des informations de destination d'accumulation ; et
une unité de processus d'émission conçue pour produire les données acquises soumises à une émission ; et
chacun de l'appareil terminal (14) et de l'appareil de traitement d'informations (10) comprenant
une unité de demande de détermination de validité conçue pour transmettre à l'appareil d'authentification (12) une demande de détermination de validité des informations de certificat jointes à la demande de processus provenant de l'appareil d'émission (13) ; et
une unité d'exécution de processus conçue pour effectuer un processus conformément à la demande de processus provenant de l'appareil d'émission (13) lors de la réception du résultat de détermination de validité des informations de certificat fournies par l'appareil d'authentification (12) indiquant que les informations de certificat sont valides.

2. Système d'émission (1) tel que défini dans la revendication 1, dans lequel l'appareil d'émission (13) transmet la demande de production d'informations de certificat à l'appareil d'authentification (12) chaque fois que l'appareil d'émission (13) transmet la demande de processus à l'appareil correspondant parmi l'appareil terminal (14) et l'appareil de traitement d'informations (10).

3. Système d'émission tel que défini dans la revendication 1 ou 2, dans lequel l'appareil d'authentification (12) effectue l'authentification Kerberos.

4. Procédé d'émission effectué dans un système d'émission (1), le système d'émission (1) comprenant un appareil terminal (14), un appareil d'émission (13), un appareil d'authentification (12) et un appareil de traitement d'informations (10) qui sont connectés par le biais d'un réseau, le procédé d'émission comprenant :
l'incitation de l'appareil d'émission (13) à transmettre une demande d'informations de certificat à l'appareil d'authentification (12) ;
l'incitation de l'appareil d'authentification (12) à fournir à l'appareil d'émission (13) des informations de certificat indiquant une autorisation d'accès à l'appareil terminal (14) ou l'appareil de traitement d'informations (10) ;
l'incitation de l'appareil d'émission (13) à joindre les informations de certificat fournies par l'appareil d'authentification (12) à une demande de processus et transmettre la demande de processus à l'appareil correspondant parmi l'appareil terminal (14) et l'appareil de traitement d'informations (10) ;
l'incitation de l'appareil correspondant parmi l'appareil terminal (14) et l'appareil de traitement d'informations (10) à transmettre une demande de détermination de validité des informations de certificat jointes à la demande de processus provenant de l'appareil d'émission (13) à l'appareil d'authentification (12) ;
l'incitation de l'appareil d'authentification (12) à recevoir une demande de détermination de validité des informations de certificat provenant de l'appareil correspondant parmi l'appareil terminal (14) et l'appareil de traitement d'informations (10), et fournir un résultat de détermination de validité des informations de certificat à l'appareil correspondant parmi l'appareil terminal (14) et l'appareil de traitement d'informations (10) ; et
l'incitation de l'appareil correspondant parmi l'appareil terminal (14) et l'appareil de traitement d'informations (10) à effectuer un processus conformément à la demande de processus provenant de l'appareil d'émission (13) lors de la réception du résultat de détermination de validité indiquant que les informations de certificat fournies par l'appareil d'authentification (12) sont valides,
l'appareil de traitement d'informations étant amené
à enregistrer une demande d'émission de données soumises à une émission reçue depuis l'appareil terminal (14),
à conserver des informations d'accumulation destinées à déterminer une destination d'accumulation des données soumises à une émission, et
à produire une demande d'émission des données soumises à une émission et les informations d'accumulation en réponse à la demande de processus provenant de l'appareil d'émission (13), et
l'appareil d'émission (13) étant amené
à recevoir la demande d'émission sélectionnée des données soumises à une émission provenant de l'utilisateur,
à transmettre à l'appareil terminal (14) ou l'appareil de traitement d'informations (10) une demande d'acquisition des données soumises à une émission à laquelle les informations de certificat fournies par l'appareil d'authentification (12) sont jointes, et acquérir les données soumises à une émission depuis l'appareil correspondant parmi l'appareil terminal (14) et l'appareil de traitement d'informations, l'appareil correspondant parmi l'appareil terminal (14) et l'appareil de traitement d'informations (10) étant déterminé comme destination d'accumulation des données soumises à une émission correspondant à la demande d'émission sélectionnée en fonction des informations de destination d'accumulation, et
à émettre les données acquises soumises à une émission.

5. Procédé d'émission tel que défini dans la revendication 4, dans lequel
la demande de production de certificat est transmise à l'appareil d'authentification (12) chaque fois que l'appareil d'émission (13) transmet la demande de processus à l'appareil correspondant parmi l'appareil terminal (14) et l'appareil de traitement d'informations (10).

6. Procédé d'émission tel que défini dans la revendication 4 ou 5, dans lequel
l'appareil d'authentification (12) effectue l'authentification Kerberos.
